(19) Europäisches Patentamt / European Patent Office / Office européen des brevets

(11) **EP 3 531 788 B1**

(12) **EUROPEAN PATENT SPECIFICATION**

(45) Date of publication and mention
of the grant of the patent:
**06.01.2021 Bulletin 2021/01**

(21) Application number: **17868756.2**

(22) Date of filing: **17.08.2017**

(51) Int Cl.:
*H04W 74/08* (2009.01)     *H04B 7/06* (2006.01)
*H04B 7/08* (2006.01)

(86) International application number:
**PCT/CN2017/097798**

(87) International publication number:
**WO 2018/086398 (17.05.2018 Gazette 2018/20)**

(54) **INFORMATION TRANSMISSION METHOD, USER EQUIPMENT, AND NETWORK DEVICE**

INFORMATIONSÜBERTRAGUNGSVERFAHREN, BENUTZERGERÄT UND
NETZWERKVORRICHTUNG

PROCÉDÉ DE TRANSMISSION D'INFORMATIONS, ÉQUIPEMENT D'UTILISATEUR ET
DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2016 CN 201611003694**

(43) Date of publication of application:
**28.08.2019 Bulletin 2019/35**

(73) Proprietor: **Huawei Technologies Co., Ltd.
Longgang District
Shenzhen, Guangdong 518129 (CN)**

(72) Inventors:
• **XU, Jianping
Chengdu
Sichuan 611756 (CN)**
• **HE, Rong
Chengdu
Sichuan 611756 (CN)**
• **HAN, Xiao
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(56) References cited:
**WO-A1-2015/099750     WO-A2-2011/034734**

CN-A- 102 177 742     CN-A- 104 079 334

• TONY XIAO HAN (HUAWEI): "Enhanced channel
access in A-BFT for 11ay ;
11-16-1164-00-00ay-enhanced-channel-access
-in-a-bft-for-11ay", IEEE DRAFT;
11-16-1164-00-00AY-ENHANCED-CHANNEL-AC
CESS -IN-A-BFT-FOR-11AY, IEEE-SA MENTOR,
PISCATAWAY, NJ USA , vol. 802.11ay 10
September 2016 (2016-09-10), pages 1-19,
XP068107566, Retrieved from the Internet:
URL:https://mentor.ieee.org/802.11/dcn/16/
11-16-1164-00-00ay-enhanced-channel-access
-in-a-bft-for-11ay.pptx [retrieved on 2016-09-10]
• SANG G KIM (LG ELECTRONICS): "On Random
Access in A-BFT ;
11-16-0948-00-00ay-on-random-access-in-a-b
ft", IEEE DRAFT;
11-16-0948-00-00AY-ON-RANDOM-ACCESS-IN-
A-B FT, IEEE-SA MENTOR, PISCATAWAY, NJ
USA , vol. 802.11ay 25 July 2016 (2016-07-25),
pages 1-10, XP068107300, Retrieved from the
Internet:
URL:https://mentor.ieee.org/802.11/dcn/16/
11-16-0948-00-00ay-on-random-access-in-a-b
ft.pptx [retrieved on 2016-07-25]

**(Cont. next page)**

EP 3 531 788 B1

- **SANGGOOK KIM(LG ELECTRONICS): "On the Implementation of Dynamic Load Balancing for A-BFT Channel ; 11-16-1483-00-00ay-on-the-implementation-of-dynamic-load-balancing-for-a-bft-channel ", IEEE DRAFT; 11-16-1483-00-00AY-ON-THE-IMPLEMENTATION-O F-DYNAMIC-LOAD-BALANCING-FOR-A-BFT-CH ANNEL , IEEE-SA MENTOR, PISCATAWAY, NJ USA , vol. 802.11ay 7 November 2016 (2016-11-07), pages 1-11, XP068110913, Retrieved from the Internet: URL:https://mentor.ieee.org/802.11/dcn/16/ 11-16-1483-00-00ay-on-the-implementation-of-dynamic-load-balancing-for-a-bft-channel .ppt x [retrieved on 2016-11-07]**

- **GHARBI SAMI ET AL: "Adaptive multiple Access Class Barring factors for M2M communications in LTE-A Networks", 2015 12TH ANNUAL IEEE CONSUMER COMMUNICATIONS AND NETWORKING CONFERENCE (CCNC), IEEE, 9 January 2015 (2015-01-09), pages 605-606, XP033176198, ISSN: 2331-9860, DOI: 10.1109/CCNC.2015.7158044 [retrieved on 2015-07-14]**

**Description**

**TECHNICAL FIELD**

Embodiments of this application relate to communications technologies, and in particular, to an information transmission method, user equipment, and a network device.

**BACKGROUND**

Currently, most wireless local area networks (Wireless Local Area Networks, WLAN) work at 2.4GHz and 5GHz frequency bands. As more devices use the frequency bands, spectrum resources in the frequency bands become shortage, but a large quantity of spectrum resources are available in a 60 GHz millimeter-wave frequency band. Therefore, the 60 GHz frequency band will be applied widely in the future.

Because a path loss of the 60 GHz millimeter-wave frequency band is very great, a communication distance of the 60 GHz millimeter-wave frequency band is usually relatively short. To increase the communication distance, a beamforming (BeamForming, BF) directional communications technology may be used. A transmit signal of a transmit antenna may be concentrated in a very narrow beam range, and a receive antenna receives a signal in a very narrow beam range. Before the BF technology is used, a network device may send a directional multi-gigabit beacon frame (Directional Multi-Gigabit, DMG Beacon Frame) in a beacon transmission interval (Beacon Transmission Interval, BTI) in a beacon interval (Beacon Interval, BI), where the DMG beacon frame may include duration information of an association beamforming training (Association BeamForming Training, A-BFT) in the BI. Each user equipment receiving the DMG beacon frame sends a sector sweep (Sector Sweep, SSW) frame to the network device by using a timeslot (Timeslot) randomly selected during the A-BFT, to implement a beamforming training of the user equipment.

With continuous development of communications technologies, a quantity of user equipments increases continuously. Therefore, a large quantity of users exist in a hotspot area. However, a quantity of timeslots in an A-BFT period in a BI is limited. Consequently, when a plurality of users receiving beacon frames contend for a timeslot in the A-BFT period, a timeslot collision probability is relatively high, and an access success rate is relatively low.

TONY XIAO HAN (HUAWEI): "Enhanced channel access in A-BFT for 1 1 ay , 11 -16-1 164-00-00ay-enhanced-channel-access-in-a-bft-for-1 1 ay", IEEE DRAFT, 11-16-1 164-00-OOAY-ENHANCED-CHANNEL-ACCESS-|N-A-BFT-FOR-11AY, IEEE-SA MENTOR, PISCATAWAY, NJ USA, vol. 802.11ay 10 September 2016 (2016-09-10), pages 1-19 proposes an enhanced A-BFT random access scheme, which simply extends the SSW slots in A-BFT.

SANG G KIM (LG ELECTRONICS): "On Random Access in A-BFT J1 1 -16-0948-00-00ay-on-random-access-in-a-bft", IEEE DRAFT, 11-16-0948-00-00AY-ON-RANDOM-ACCESS-IN-A-BFT, IEEE-SA MENTOR, PISCATAWAY, NJ USA, vol. 802.1 1 ay 25 July 2016 (2016-07-25), pages 1-10, proposes a method to spread out the access attempts from 11ay STAs while maintaining 11ad designs and thus providing simple remedies for 11ay designs.

SANGGOOK KIM (LG ELECTRONICS): "On the Implementation of Dynamic Load Balancing for A-BFT Channel, 11-16-1483-00-00ay-on-the-implementation-of -dynamic-load-balancing-for-a-bit-channel", IEEE DRAFT, 11-16-1483-00-OOAY-ON-THE-IMPLEMENTATAON-OF-DYNAMIC-LOAD-BALANCING-FOR-A-BFT-CHA NNEL, IEEE-SAMENTOR, PISCATAWAY, NJ USA, vol. 802.11aY 7 November 2016 (2016-1 1-07), pages 1-11, proposes including 1 octet of a field ("OverloadControl") in EDMG Operation element. The first half denotes the values of RSSBackoff and RSSREtry limit. The second half is reserved.

GHARBI SAMI ET AL: "Adaptive multiple Access Class Barring factors forM2M communications in LTE-A Networks", 2015 12TH ANNUAL IEEE CONSUMER COMMUNICATIONS ANDNETWORKING CONFERENCE (CCNC), IEEE, 9 January 2015(2015-01 -09), pages 605-606, proposes an algorithm based on adaptive multiple Access Class Barring MACB factors, according to M2M traffic category in order to overcome the Random Access(RA) overload in LTE-A Networks. Simulations were done for testing the performance of our MACB scheme and show that using multiples ACB factors, and dynamically adapt them to the congestion level in addition to traffic type category increase the access probability and reduce overload.

**SUMMARY**

The invention made is disclosed in the independent claims attached. Further features are claimed in the attached set of dependent claims. Embodiments of this application provide an information transmission method, user equipment, and a network device to reduce timeslot collision between user equipments in an A-BFT period and increase an access success rate. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

According to a first aspect, an embodiment of this application provides an information transmission method, including:

receiving, by user equipment, a beacon frame sent by a network device, where the beacon frame includes duration information of an association beamforming training A-BFT and indication information of an access control parameter, and the access control parameter is determined by the network device based on a quantity of user equipments to be accessed and a duration of the A-BFT;
determining, by the user equipment, a time range of the A-BFT based on the duration information of the A-BFT;
determining, by the user equipment, the access control parameter based on the indication information of the access control parameter; and
selecting, by the user equipment, a timeslot from the time range of the A-BFT based on the access control parameter.

In the information transmission method, the network device may determine the access control parameter based on the quantity of user equipments to be accessed and the duration of the A-BFT, and send the beacon frame including the duration information of the A-BFT and the indication information of the access control parameter to the user equipment, so that the user equipment receiving the beacon frame determines the time range of the A-BFT based on the duration information of the A-BFT, determines the access control parameter based on the indication information of the access control parameter, and selects the timeslot from the time range of the A-BFT based on the access control parameter. Therefore, a quantity of user equipments contending for access in the same A-BFT to perform the beamforming training is controlled in a range. This reduces a probability of timeslot collision between user equipments during the A-BFT, increases an access success rate, improves beamforming training efficiency, and therefore increases a network throughput rate.

The access control parameter includes a first access threshold and a second access threshold; the first access threshold is less than or equal to the second access threshold; and correspondingly, the selecting, by the user equipment, a timeslot from the time range of the A-BFT based on the access control parameter includes:

generating, by the user equipment, a random integer value less than or equal to the second access threshold;
comparing, by the user equipment, the random integer value with the first access threshold; and
if the random integer value is less than or equal to the first access threshold, randomly selecting, by the user equipment, a timeslot from the time range of the A-BFT.

In the information transmission method, the network device sends the beacon frame including the first access threshold and the second access threshold to the user equipment, where the first access threshold is less than the second access threshold, so that user equipment generating a random integer value less than or equal to the first access threshold can randomly select a timeslot for contention-based access, and that user equipment generating a random integer value greater than the first access threshold abandons contention-based access. Therefore, a quantity of user equipments contending for access in the time range of the same A-BFT to perform the beamforming training can be effectively controlled in a range. This reduces a probability of timeslot collision between user equipments during the A-BFT, increases an access success rate, improves beamforming training efficiency, and therefore increases a network throughput rate.

Or, the access control parameter is an access probability; and correspondingly, the selecting, by the user equipment, a timeslot from the time range of the A-BFT based on the access control parameter includes:

generating, by the user equipment, a random value less than or equal to 1;
comparing, by the user equipment, the random value with the access probability; and
if the random value is less than or equal to the access probability, randomly selecting, by the user equipment, a timeslot from the time range of the A-BFT.

In the information transmission method, the network device may send the beacon frame including the access probability to the user equipment, so that user equipment generating a random value less than or equal to the access probability can randomly select a timeslot for contention-based access, and that user equipment generating a random value greater than the access probability abandons contention-based. Therefore, a quantity of user equipments contending for access in the time range of the same A-BFT to perform the beamforming training can be effectively controlled in a range. This reduces a probability of timeslot collision between user equipments during the A-BFT, increases an access success rate, improves beamforming training efficiency, and therefore increases a network throughput rate.

The beacon frame further includes usage indication information of at least one channel; the duration information of the A-BFT includes duration information corresponding to each channel; and

the randomly selecting, by the user equipment, a timeslot from the time range of the A-BFT includes:

> determining, by the user equipment based on the usage indication information of the at least one channel, whether the at least one channel is available, and selecting an available channel from the at least one channel;
> determining, by the user equipment based on duration information corresponding to the available channel, a time range corresponding to the available channel; and
> randomly selecting, by the user equipment, a timeslot from the time range corresponding to the available channel.

Optionally, the information transmission method may further include:
sending, by the user equipment, a sector sweep SSW frame to the network device in the randomly selected timeslot by using the available channel.

In the information transmission method, the method in any one of the foregoing embodiments may be further used on a plurality of channels to reduce a probability of access collision between stations in a same timeslot on a same channel more effectively.

Optionally, the duration information of the A-BFT includes directional multi-gigabit DMG duration information corresponding to a primary channel and enhanced directional multi-gigabit EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and

the determining, by the user equipment based on duration information corresponding to the available channel, a time range corresponding to the available channel includes:
if the available channel is the primary channel, determining, by the user equipment based on the EDMG duration information corresponding to the primary channel, the time range corresponding to the available channel.

Optionally, the beacon frame may further include EDMG duration information corresponding to a secondary channel; and

the determining, by the user equipment based on duration information corresponding to the available channel, a time range corresponding to the available channel includes:
if the available channel is the secondary channel, determining, by the user equipment based on the EDMG duration information corresponding to the secondary channel, the time range corresponding to the available channel.

Optionally, a DMG duration corresponding to the primary channel and an EDMG duration corresponding to the primary channel are determined by the network device based on a quantity of DMG user equipments to be accessed, a quantity of EDMG user equipments to be accessed, and a quantity of available channels for the EDMG user equipments to be accessed.

In the information transmission method, access fairness between the DMG user equipment and the EDMG user equipment may be further ensured by using the DMG duration corresponding to the primary channel and the EDMG duration corresponding to the primary channel.

Optionally, the indication information of the access control parameter is located in any one of the following positions in the beacon frame:

> at least one reserved bit of a DMG operation information field in a DMG operation element; and
> a preset field or an information element of a data payload field, where the preset field or the information element includes at least one bit.

According to a second aspect, an embodiment of this application further provides user equipment, including a receiver and a processor, where the receiver is connected to the processor;
the receiver is configured to receive a beacon frame sent by a network device, where the beacon frame includes duration information of an association beamforming training A-BFT and indication information of an access control parameter, and the access control parameter is determined by the network device based on a quantity of user equipments to be accessed and a duration of the A-BFT; and
the processor is configured to determine a time range of the A-BFT based on the duration information of the A-BFT, determine the access control parameter based on the indication information of the access control parameter, and select a timeslot from the time range of the A-BFT based on the access control parameter.

The access control parameter includes a first access threshold and a second access threshold; the first access threshold is less than or equal to the second access threshold; and

correspondingly, the processor is specifically configured to generate a random integer value less than or equal to the second access threshold, compare the random integer value with the first access threshold, and if the random integer value is less than or equal to the first access threshold, randomly select a timeslot from the time range of the A-BFT.

Or, the access control parameter is an access probability; and correspondingly, the processor is specifically configured to generate a random value less than or equal to 1, compare the random value with the access probability, and if the random value is less than or equal to the access probability, randomly select a timeslot from the time range of the A-BFT.

The beacon frame further includes usage indication information of at least one channel; the duration information of the A-BFT includes duration information corresponding to each channel; and

the processor is specifically configured to determine, based on the usage indication information of the at least one channel, whether the at least one channel is available, select an available channel from the at least one channel, determine, based on duration information corresponding to the available channel, a time range corresponding to the available channel, and randomly select a timeslot from the time range corresponding to the available channel.

Optionally, the user equipment further includes a transmitter, where the transmitter is connected to the processor; and

the transmitter is configured to send a sector sweep SSW frame to the network device in the randomly selected timeslot by using the available channel.

Optionally, the duration information of the A-BFT includes directional multi-gigabit DMG duration information corresponding to a primary channel and enhanced directional multi-gigabit EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and

the processor is specifically configured to determine, based on the EDMG duration information corresponding to the primary channel, the time range corresponding to the available channel if the available channel is the primary channel.

Optionally, the beacon frame further includes EDMG duration information corresponding to a secondary channel; and

the processor is specifically configured to determine, based on the EDMG duration information corresponding to the secondary channel, the time range corresponding to the available channel if the available channel is the secondary channel.

Optionally, a DMG duration corresponding to the primary channel and an EDMG duration corresponding to the primary channel are determined by the network device based on a quantity of DMG user equipments to be accessed, a quantity of EDMG user equipments to be accessed, and a quantity of available channels for the EDMG user equipments to be accessed.

Optionally, the indication information of the access control parameter is located in any one of the following positions in the beacon frame:

at least one reserved bit of a DMG operation information field in a DMG operation element; and

a preset field or an information element of a data payload field, where the preset field or the information element includes at least one bit.

According to a third aspect, an embodiment of this application further provides a network device, including a processor and a transmitter, where the processor is connected to the transmitter;

the processor is configured to determine an access control parameter based on a quantity of user equipments to be accessed and a duration of an association beamforming training A-BFT; and

the transmitter is configured to send a beacon frame to user equipment, where the beacon frame includes duration information of the A-BFT and indication information of the access control parameter, the duration information of the A-BFT is used to enable the user equipment to determine a time range of the A-BFT, and the indication information of the access control parameter is used to enable the user equipment to determine the access control parameter, and select a timeslot from the time range of the A-BFT based on the access control parameter.

The access control parameter comprises a first access threshold and a second access threshold; the first access threshold is less than or equal to the second access threshold; and

the first access threshold is used to enable the user equipment to compare a generated random integer value that is less than or equal to the second access threshold with the first access threshold, and if the random integer value is less than or equal to the first access threshold, randomly select a timeslot from the time range of the A-BFT.

Or, the access control parameter is an access probability, and the access probability is used to enable the user equipment to compare a generated random value that is less than or equal to 1 with the access probability, and if the random value is less than or equal to the access probability, randomly select a timeslot from the time range of the A-BFT.

The beacon frame further includes usage indication information of at least one channel; the duration information of the A-BFT includes duration information corresponding to each channel;

duration information corresponding to the at least one channel is used to enable the user equipment to determine whether the at least one channel is available, and select an available channel from the at least one channel; and

the duration information corresponding to each channel is used to enable the user equipment to determine, based on duration information corresponding to the available channel, a time range corresponding to the available channel, and then randomly select a timeslot from the time range corresponding to the available channel.

Optionally, the network device further includes a receiver, where
the receiver is configured to receive a sector sweep SSW frame sent by the user equipment in the randomly selected timeslot by using the available channel.

Optionally, the duration information of the A-BFT includes directional multi-gigabit DMG duration information corresponding to a primary channel and enhanced directional multi-gigabit EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and
the EDMG duration information corresponding to the primary channel is used to enable the user equipment to determine, based on the EDMG duration information corresponding to the primary channel when the available channel is the primary channel, the time range corresponding to the available channel.

Optionally, the beacon frame further includes EDMG duration information corresponding to a secondary channel; and
the EDMG duration information corresponding to the secondary channel is used to enable the user equipment to determine, based on the EDMG duration information corresponding to the secondary channel when the available channel is the secondary channel, the time range corresponding to the available channel.

Optionally, before the transmitter sends the beacon frame to the user equipment, the processor is further configured to determine, based on a quantity of DMG user equipments to be accessed, a quantity of EDMG user equipments to be accessed, and a quantity of available channels for the EDMG user equipments to be accessed, a DMG duration corresponding to the primary channel and an EDMG duration corresponding to the primary channel.

Optionally, the indication information of the access control parameter is located in any one of the following positions in the beacon frame:

at least one reserved bit of a DMG operation information field in a DMG operation element; and
a preset field or an information element of a data payload field, where the preset field or the information element includes at least one bit.

According to the information transmission method, user equipment, and network device provided by the embodiments of this application, the network device may determine the access control parameter based on the quantity of user equipments to be accessed and the duration of the A-BFT, and send the beacon frame including the duration information of the A-BFT and the indication information of the access control parameter to the user equipment, so that the user equipment receiving the beacon frame determines the time range of the A-BFT based on the duration information of the A-BFT, determines the access control parameter based on the indication information of the access control parameter, and selects the timeslot from the time range of the A-BFT based on the access control parameter. Therefore, a quantity of user equipments contending for access in the same A-BFT to perform the beamforming training is controlled in a range. This reduces a probability of timeslot collision between user equipments during the A-BFT, increases an access success rate, improves beamforming training efficiency, and therefore increases a network throughput rate.

## BRIEF DESCRIPTION OF DRAWINGS

FIG. 1 is a schematic structural diagram of a network system to which each embodiment of this application is applicable;
FIG. 2 is a flowchart of an information transmission method according to Embodiment 1 of this application;
FIG. 3 is a flowchart of an information transmission method according to Embodiment 2 of this application;
FIG. 4 is a schematic diagram of a frame exchange between a PCP/AP and a station in an information transmission method according to Embodiment 2 of this application;
FIG. 5 is a flowchart of an information transmission method according to Embodiment 3 of this application;
FIG. 6 is a schematic diagram of a frame exchange between a PCP/AP and a station in an information transmission method according to Embodiment 3 of this application;
FIG. 7 is a schematic structural diagram of a DMG operation element according to Embodiment 4 of this application;
FIG. 8 is a schematic structural diagram of an access control parameter element according to Embodiment 4 of this application;
FIG. 9 is a flowchart of an information transmission method according to Embodiment 4 of this application;
FIG. 10 is a schematic diagram of a frame exchange between a PCP/AP and a station in an information transmission method according to Embodiment 4 of this application;

FIG. 11 is a graph of a correspondence between a quantity of user equipments to be accessed and a quantity of user equipments that are successfully accessed according to Embodiment 4 of this application;

FIG. 12 is another graph of a correspondence between a quantity of user equipments to be accessed and a quantity of user equipments that are successfully accessed according to Embodiment 4 of this application;

FIG. 13 is a schematic structural diagram of a BI control field according to Embodiment 4 of this application;

FIG. 14 is a structural diagram of timeslots corresponding to DMG user equipment and EDMG user equipment according to Embodiment 4 of this application;

FIG. 15 is a schematic structural diagram of an information transmission apparatus according to Embodiment 5 of this application;

FIG. 16 is a schematic structural diagram of an information transmission apparatus according to Embodiment 6 of this application;

FIG. 17 is a schematic structural diagram of user equipment according to Embodiment 7 of this application;

FIG. 18 is a schematic structural diagram of a computer program product according to Embodiment 7 of this application;

FIG. 19 is a schematic structural diagram of a storage medium according to Embodiment 7 of this application;

FIG. 20 is a schematic structural diagram of a network device according to Embodiment 8 of this application;

FIG. 21 is a schematic structural diagram of a computer program product according to Embodiment 8 of this application; and

FIG. 22 is a schematic structural diagram of a storage medium according to Embodiment 8 of this application.

## DESCRIPTION OF EMBODIMENTS

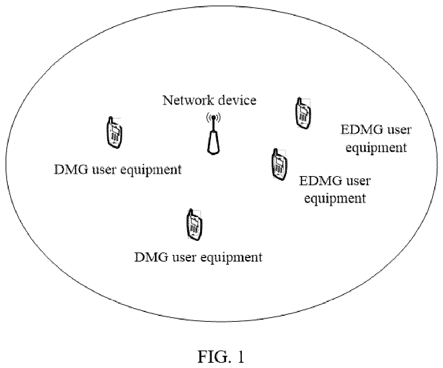

Embodiments of this application provide an information transmission method, a network device, and user equipment. The embodiments of this application are applicable to a WLAN system, and in particular, to WLAN systems of an 802.11ad standard, an 802.11ay standard, and standards subsequently improved over the standards. The information transmission method is applicable to a network scenario including user equipments of a plurality of access types. FIG. 1 is a schematic structural diagram of a network system to which each embodiment of this application is applicable. As shown in FIG. 1, the network system to which the information transmission method is applicable may include, for example, a network device, at least one directional multi-gigabit (Directional Multi-Gigabit, DMG) user equipment, and at least one enhanced directional multi-gigabit (Enhanced Directional Multi-Gigabit, EDMG) user equipment. Each of the DMG user equipment and the EDMG user equipment in FIG. 1 may be user equipment of an access type. The network device may be, for example, a personal basic service set control point (Personal Basic Service Set Control Point, PCP) or an access point (Access Point, AP). The user equipment may be a station (Station, STA). The DMG user equipment in FIG. 1 may be a DMG station, that is, a station corresponding to the 802.11ad standard. The EDMG user equipment may be an EDMG station, that is, a station corresponding to the 802.11ay standard.

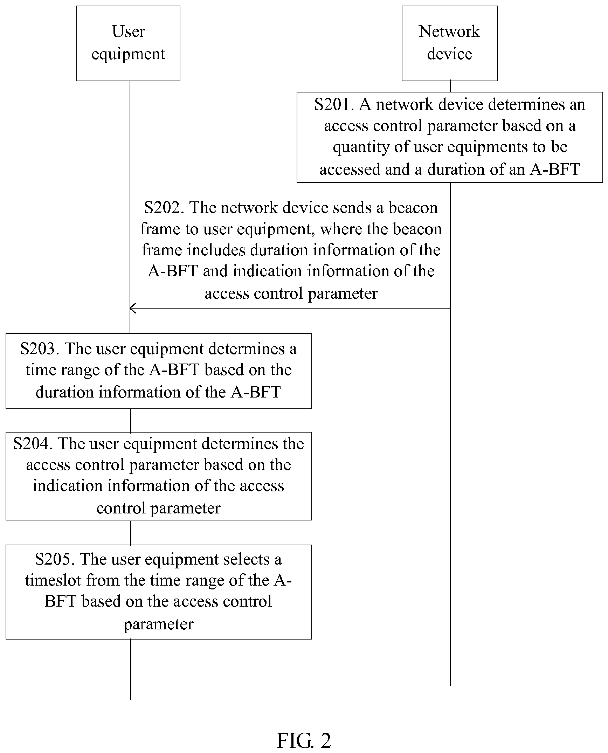

Embodiment 1 of this application provides an information transmission method. FIG. 2 is a flowchart of an information transmission method according to Embodiment 1 of this application. As shown in FIG. 2, the method may further include the following steps.

S201. A network device determines an access control parameter based on a quantity of user equipments to be accessed and a duration of an A-BFT.

Specifically, the quantity of user equipments to be accessed may be a quantity of EDMG user equipments to be accessed. The duration of the A-BFT may be a total duration of an A-BFT in a BI, or may be a duration of an A-BFT of the EDMG user equipment in a BI. The duration of the A-BFT may be indicated by a quantity of timeslots corresponding to the duration of the A-BFT.

S202. The network device sends a beacon frame to user equipment, where the beacon frame includes duration information of the A-BFT and indication information of the access control parameter.

Specifically, for example, the network device may send the beacon frame in broadcast or multicast mode, so that user equipment to be accessed may receive the beacon frame. The network device may send the beacon frame to the user equipment in a BTI in the BI. The beacon frame may be, for example, a DMG beacon frame.

S203. The user equipment determines a time range of the A-BFT based on the duration information of the A-BFT.

Specifically, the user equipment may determine the duration of the A-BFT based on the duration information of the A-BFT, and determine the time range of the A-BFT based on a preset start time and the duration of the A-BFT. For example, if the duration of the A-BFT is 8 and the preset start time is 0, the time range of the A-BFT may be eight timeslots from a timeslot 0 to a timeslot 7, and may be indicated by [timeslot 0, timeslot 7].

S204. The user equipment determines the access control parameter based on the indication information of the access control parameter.

S205. The user equipment selects a timeslot from the time range of the A-BFT based on the access control parameter.

Specifically, the user equipment may determine, based on the access control parameter, whether the user equipment participates in current contention; and if yes, the user equipment randomly selects a timeslot from the time range of the A-BFT, and then sends an SSW frame to the network device in the selected timeslot; or if no, the user equipment does not participate in current contention.

In the information transmission method provided by Embodiment 1 of this application, the network device may determine the access control parameter based on the quantity of user equipments to be accessed and the duration of the A-BFT, and send the beacon frame including the duration information of the A-BFT and the indication information of the access control parameter to the user equipment, so that the user equipment receiving the beacon frame determines the time range of the A-BFT based on the duration information of the A-BFT, determines the access control parameter based on the indication information of the access control parameter, and selects the timeslot from the time range of the A-BFT based on the access control parameter. Therefore, a quantity of user equipments contending for access in the same A-BFT to perform the beamforming training is controlled in a range. This reduces a probability of timeslot collision between user equipments during the A-BFT, increases an access success rate, improves beamforming training efficiency, and therefore increases a network throughput rate.

In a feasible implementation, the access control parameter may include a first access threshold and a second access threshold. The first access threshold is less than or equal to the second access threshold.

If the access control parameter includes the first access threshold and the second access threshold, the user equipment may determine the first access threshold based on a decimal number corresponding to indication bits in which indication information of the first access threshold is located, and determine the second access threshold based on a quantity of indication bits in which the indication information of the first access threshold is located.

The first access threshold may be indicated by a threshold. The second access threshold may be a maximum access threshold, and may be indicated by MAX_Threshold. If the quantity of bits is N, a specific value of the MAX_Threshold may be $2^{N-1}$. For example, if the indication bits in which the indication information of the first access threshold is located are 010, it may be determined that the first access threshold is 2; and because N is 3, it may be determined that the MAX_Threshold is 7. In other words, the first access threshold may be any integer in [0, MAX Threshold] set by the network device.

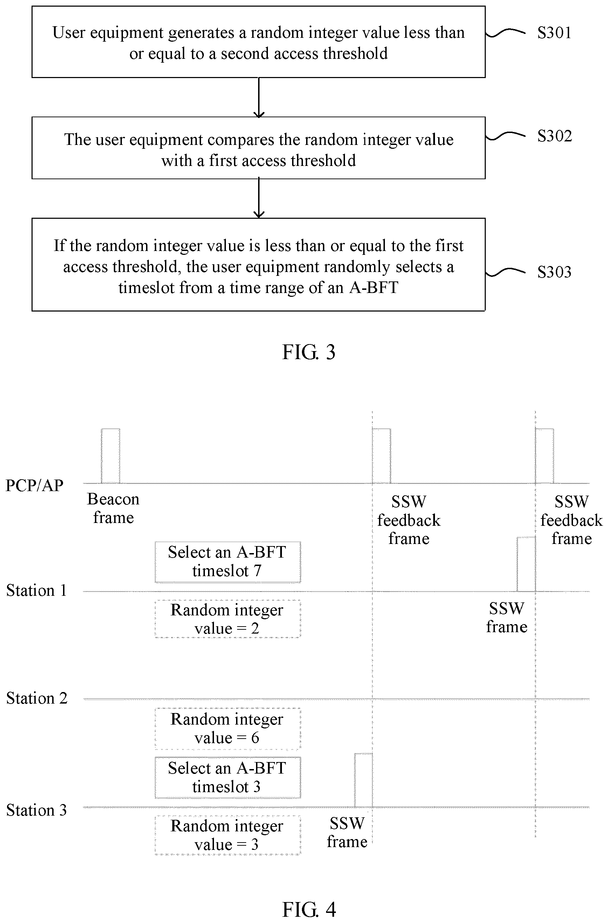

Optionally, Embodiment 2 of this application may further provide an information transmission method. FIG. 3 is a flowchart of an information transmission method according to Embodiment 2 of this application. As shown in FIG. 3, in the method, that the user equipment selects a timeslot from the time range of the A-BFT based on the access control parameter in S205 may include the following steps.

S301. The user equipment generates a random integer value less than or equal to the second access threshold.

For example, the user equipment may randomly generate an integer value in [0, MAX_Threshold].

S302. The user equipment compares the random integer value with the first access threshold.

S303. If the random integer value is less than or equal to the first access threshold, the user equipment randomly selects a timeslot from the time range of the A-BFT.

Specifically, if the random integer value is less than or equal to the first access threshold, the user equipment may determine to participate in the current contention. If the random integer value is greater than the first access threshold, the user equipment determines not to participate in the current contention.

If the user equipment determines to participate in the current contention, the user equipment randomly selects a timeslot, and starts a timer of the randomly selected timeslot. If the timer expires, the user equipment may send the SSW frame to the network device in the randomly selected timeslot.

An example is used for description hereinafter with reference to the following Table 1. The following Table 1 is a table of a correspondence between a corresponding random integer value for participating in A-BFT timeslot contention and the first access threshold in the information transmission method in Embodiment 2 of this application.

Table 1

| First access threshold | Each random integer value for participating in A-BFT timeslot contention |
|---|---|
| 000 | 0 |
| 001 | 0, 1 |
| 010 | 0, 1, 2 |
| 011 | 0, 1, 2, 3 |
| 100 | 0, 1, 2, 3, 4 |
| 101 | 0, 1, 2, 3, 4, 5 |

(continued)

| First access threshold | Each random integer value for participating in A-BFT timeslot contention |
|---|---|
| 110 | 0, 1, 2, 3, 4, 5, 6 |
| 111 | 0, 1, 2, 3, 4, 5, 6, 7 |

Referring to the foregoing Table 1, if the first access threshold is 000, that is, 0, when the random integer value generated by the user equipment is 0, the user equipment may determine to participate in the A-BFT timeslot contention; if the first access threshold is 001, that is, 1, when the random integer value generated by the user equipment is 0 or 1, the user equipment may determine to participate in the A-BFT timeslot contention; if the first access threshold is 010, that is, 2, when the random integer value generated by the user equipment is 0, 1 or 2, the user equipment may determine to participate in the A-BFT timeslot contention; if the first access threshold is 011, that is, 3, when the random integer value generated by the user equipment is any one of 0, 1, 2, and 3, the user equipment may determine to participate in the A-BFT timeslot contention; if the first access threshold is 100, that is, 4, when the random integer value generated by the user equipment is any one of 0, 1, 2, 3, and 4, the user equipment may determine to participate in the A-BFT timeslot contention; if the first access threshold is 101, that is, 5, when the random integer value generated by the user equipment is any one of 0, 1, 2, 3, 4, and 5, the user equipment may determine to participate in the A-BFT timeslot contention; if the first access threshold is 110, that is, 6, when the random integer value generated by the user equipment is any one of 0, 1, 2, 3, 4, 5, and 6, the user equipment may determine to participate in the A-BFT timeslot contention; or if the first access threshold is 111, that is, 7, when the random integer value generated by the user equipment is any one of 0, 1, 2, 3, 4, 5, 6, and 7, the user equipment may determine to participate in the A-BFT timeslot contention.

For example, if the network device is a PCP/AP and the user equipment is a station, where the station may be an EDMG station, the second access threshold is 7, and the first access threshold is 4. FIG. 4 is a schematic diagram of a frame exchange between a PCP/AP and a station in an information transmission method according to Embodiment 2 of this application.

As shown in FIG. 4, the PCP/AP sends a beacon frame to each station in a BTI in a BI. An integer value randomly generated by a station 1 after the station 1 receives the beacon frame is 2, and is less than the first access threshold 4. Therefore, the station 1 may randomly select a timeslot 7 from the time range of the A-BFT, send an SSW frame to the network device when a timer of the timeslot 7 expires, and then receive an SSW feedback (Feedback) frame returned by the network device. An integer value randomly generated by a station 2 after the station 2 receives the beacon frame is 6, and is greater than the first access threshold 4. Therefore, the station 2 does not participate in the current A-BFT timeslot contention. An integer value randomly generated by a station 3 after the station 3 receives the beacon frame is 3, and is less than the first access threshold 4. Therefore, the station 3 may randomly select a timeslot 3 from the time range of the A-BFT, send an SSW frame to the network device when a timer of the timeslot 3 expires, and then receive an SSW feedback frame returned by the network device.

In the information transmission method provided by Embodiment 2 of this application, on a basis of the foregoing method, the network device sends the beacon frame including the first access threshold and the second access threshold to the user equipment, where the first access threshold is less than the second access threshold, so that user equipment generating a random integer value less than or equal to the first access threshold can randomly select a timeslot for contention-based access, and that user equipment generating a random integer value greater than the first access threshold abandons contention-based access. Therefore, a quantity of user equipments contending for access in the time range of the same A-BFT to perform the beamforming training can be effectively controlled in a range. This reduces a probability of timeslot collision between user equipments during the A-BFT, increases an access success rate, improves beamforming training efficiency, and therefore increases a network throughput rate.

In another manner, the access control parameter may include an access probability.

The access probability may be a probability value that is determined by the network device and is less than or equal to 1.

If the access control parameter includes the access probability, the user equipment may determine the access probability based on a ratio of a decimal number corresponding to indication bits in which the indication information of the access control parameter is located to a maximum value corresponding to the indication bits. For example, if the indication bits in which the indication information of the access control parameter is located are $B_N B_{N-1}...B_3 B_2 B_1$, the decimal number corresponding to the indication bits in which the indication information of the access control parameter is located may be $\sum_{i=1}^{N} B_i \times 2^{i-1}$, and the maximum value corresponding to the indication bits may be $2^N - 1$. In this case, the user equipment may obtain the access probability based on the following formula (1):

$$P = \frac{\sum_{i=1}^{N} B_i \times 2^{i-1}}{2^N - 1} \quad \text{formula (1)}$$

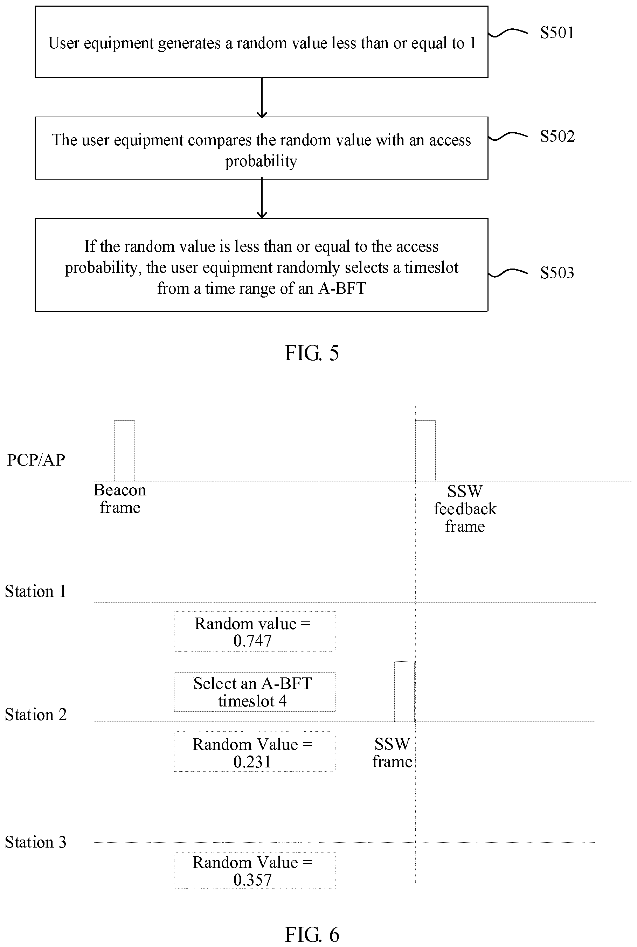

Optionally, Embodiment 3 of this application may further provide an information transmission method. FIG. 5 is a flowchart of an information transmission method according to Embodiment 3 of this application. As shown in FIG. 5, in the method, that the user equipment selects a timeslot from the time range of the A-BFT based on the access control parameter in S205 may include the following steps.

S501. The user equipment generates a random value less than or equal to 1.

For example, the user equipment may randomly generate a random value in [0, 1].

S502. The user equipment compares the random value with the access probability.

S503. If the random value is less than or equal to the access probability, the user equipment randomly selects a timeslot from the time range of the A-BFT.

Specifically, if the random value is less than or equal to the access probability, the user equipment may determine to participate in current contention; or if the random value is greater than the access probability, the user equipment determines not to participate in current contention.

If the user equipment determines to participate in the current contention, the user equipment randomly selects a timeslot, and starts a timer of the randomly selected timeslot. If the timer expires, the user equipment may send the SSW frame to the network device in the randomly selected timeslot.

For example, if the network device is a PCP/AP and the user equipment is a station, where the station may be an EDMG station, the access probability is 0.3. FIG. 6 is a schematic diagram of a frame exchange between a PCP/AP and a station in an information transmission method according to Embodiment 3 of this application.

As shown in FIG. 6, the PCP/AP sends a beacon frame to each station in a BTI in a BI. A random value randomly generated by a station 1 after the station 1 receives the beacon frame is 0.747, and is greater than the access probability 0.3. Therefore, the station 1 does not participate in the current A-BFT timeslot contention. A random value randomly generated by a station 2 after the station 2 receives the beacon frame is 0.231, and is less than the access probability 0.3. Therefore, the station 2 may randomly select a timeslot 4 from the time range of the A-BFT, send an SSW frame to the network device when a timer of the timeslot 4 expires, and then receive an SSW feedback frame returned by the network device. A random value randomly generated by a station 3 after the station 3 receives the beacon frame is 0.357, and is greater than the access probability 0.3. Therefore, the station 3 does not participate in the current A-BFT timeslot contention.

In the information transmission method provided by Embodiment 3 of this application, on a basis of the foregoing method, the network device sends the beacon frame including the access probability to the user equipment, so that user equipment generating a random value less than or equal to the access probability can randomly select a timeslot for contention-based access, and that user equipment generating a random value greater than the access probability abandons contention-based. Therefore, a quantity of user equipments contending for access in the time range of the same A-BFT to perform the beamforming training can be effectively controlled in a range. This reduces a probability of timeslot collision between user equipments during the A-BFT, increases an access success rate, improves beamforming training efficiency, and therefore increases a network throughput rate.

Optionally, the beacon frame may further include usage indication information of at least one channel; and the duration information of the A-BFT includes duration information corresponding to each channel.

Optionally, the indication information of the access control parameter is located in the following position in the beacon frame: at least one reserved bit of a DMG operation information field in a DMG operation element.

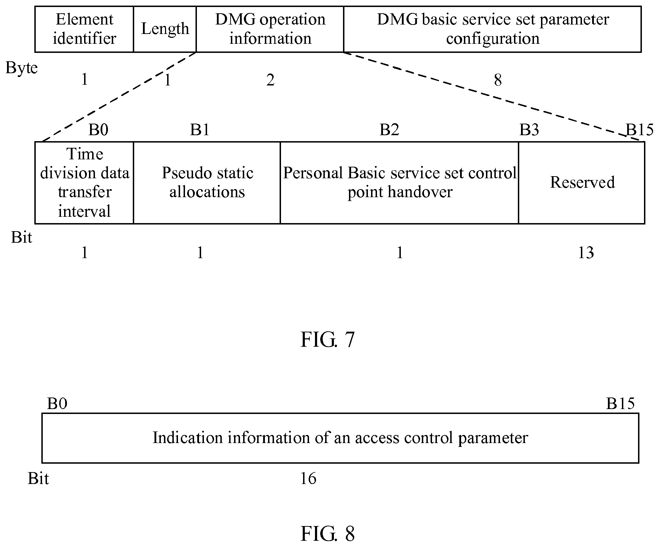

An example is used for description hereinafter. FIG. 7 is a schematic structural diagram of a DMG operation element according to Embodiment 4 of this application. As shown in FIG. 7, the DMG operation element may include a one-byte element identifier field, a one-byte length field, a two-byte DMG operation information (Operation Information) field, and an eight-byte DMG basic service set parameter configuration (Basic Service Set Parameter Configuration) field.

The DMG operation information field may include a one-bit time division data transfer interval (Time Division Data Transfer Interval, TDDTI) field, a one-bit pseudo static allocations (Pseudo Static Allocations) field, a one-bit personal basic service set control point handover (Personal Basic Service Set Control Point Handover, PCP Handover) field, and a 13-bit reserved field. The indication information of the access control parameter may be, for example, at least one bit in B6 to B15 located in the beacon frame as shown in FIG. 7.

Optionally, the indication information of the access control parameter is located in the following position in the beacon frame:

a preset field or an information element of a data payload field, where the preset field or the information element includes at least one bit.

FIG. 8 is a schematic structural diagram of an access control parameter element according to Embodiment 4 of this application. As shown in FIG. 8, the access control parameter element may be an information element added to the data payload field. For example, the indication information of the access control parameter may be, for example, at least one bit in B6 to B15 located in the beacon frame as shown in FIG. 8.

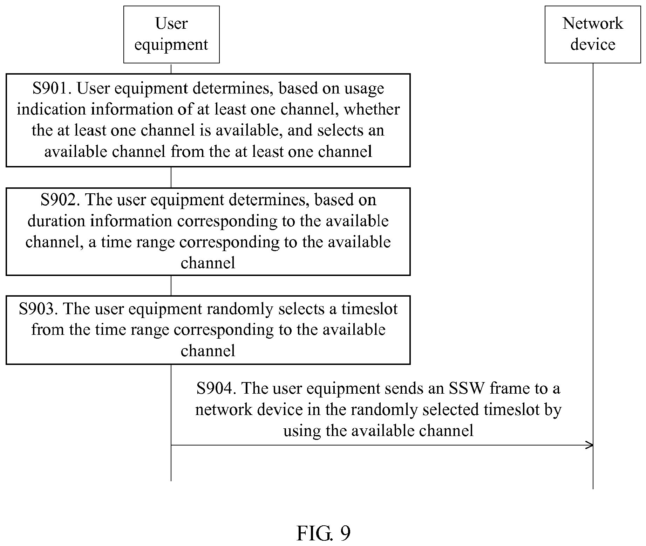

Optionally, Embodiment 4 of this application further provides an information transmission method. FIG. 9 is a flowchart of an information transmission method according to Embodiment 4 of this application. As shown in FIG. 9, in the method, that the user equipment randomly selects a timeslot from the time range of the A-BFT may include the following steps.

S901. The user equipment determines, based on the usage indication information of the at least one channel, whether the at least one channel is available, and selects an available channel from the at least one channel.

The available channel may be a primary channel (Primary Chanel) or may be a secondary channel (Secondary Chanel).

S902. The user equipment determines, based on duration information corresponding to the available channel, a time range corresponding to the available channel.

Each channel may have corresponding duration information. A time range corresponding to each channel may be determined based on the duration information corresponding to the channel. Time ranges corresponding to different secondary channels may be the same or may be different.

For example, if the available channel is a secondary channel, and the secondary channel is a channel 2, the user equipment may determine, based on duration information corresponding to the channel 2 in the beacon frame, a time range corresponding to the channel 2.

S903. The user equipment randomly selects a timeslot from the time range corresponding to the available channel.

The method may further include:
S904. The user equipment sends an SSW frame to the network device in the randomly selected timeslot by using the available channel.

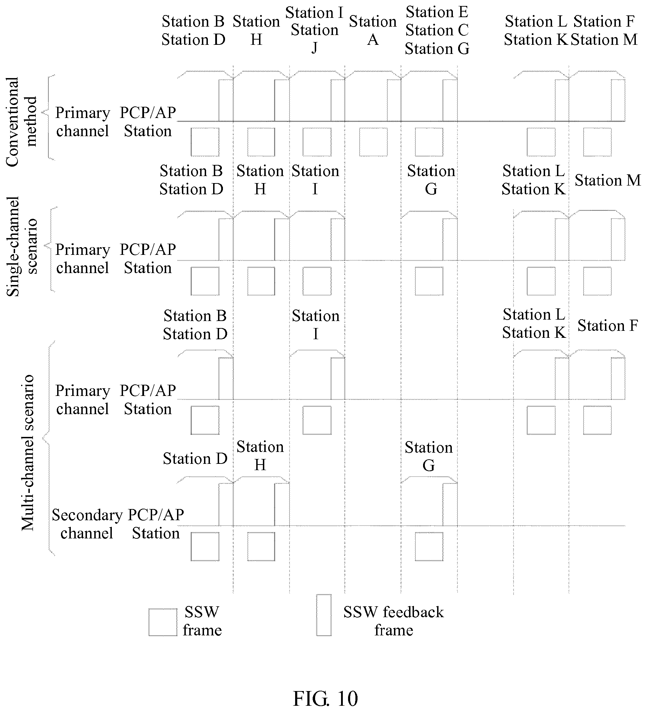

An example is used for description hereinafter. FIG. 10 is a schematic diagram of a frame exchange between a PCP/AP and a station in an information transmission method according to Embodiment 4 of this application.

As shown in FIG. 10, in the prior art, stations contend merely for access to a primary channel. In addition, on the primary channel, each station may randomly select an A-BFT timeslot, and then send an SSW frame, and a probability of timeslot collision between stations is relatively high. In FIG. 10, if both a station B and a station D select a timeslot 0 on the primary channel to send an SSW frame, timeslot collision occurs between the station B and the station D in the timeslot 0, and therefore both the station B and the station D fail to perform access; if only a station H selects a timeslot 1 on the primary channel to send an SSW frame, the station H successfully performs access; if both a station I and a station J select a timeslot 2 on the primary channel to send an SSW frame, timeslot collision occurs between the station I and the station J in the timeslot 2, and therefore both the station I and the station J fail to perform access; if only a station A selects a timeslot 3 on the primary channel to send an SSW frame, the station A successfully performs access; if all of the station E, a station C, and a station G select a timeslot 4 on the primary channel to send an SSW frame, timeslot collision occurs between the station E, the station C, and the station G in the timeslot 4, and therefore all of the station E, the station C, and the station G fail to perform access; if both a station L and a station K select a timeslot 6 on the primary channel to send an SSW frame, timeslot collision occurs between the station L and the station K in the timeslot 6, and therefore both the station L and the station K fail to perform access; or if both the station F and a station M select a timeslot 7 on the primary channel to send an SSW frame, timeslot collision occurs between the station F and the station M in the timeslot 7, and therefore both the station F and the station M fail to perform access.

As shown in FIG. 10, based on the method in a single-channel scenario provided by each embodiment of this application above, if both the station B and the station D select the timeslot 0 on the primary channel to send an SSW frame, timeslot collision occurs between the station B and the station D in the timeslot 0, and therefore both the station B and the station D fail to perform access; if only the station H selects the timeslot 1 on the primary channel to send an SSW frame, the station H successfully performs access; if only the station I selects the timeslot 2 on the primary channel to send an SSW frame, the station I successfully performs access in the timeslot 2; if only the station G selects the timeslot 4 on the primary channel to send an SSW frame, the station G successfully performs access in the timeslot 4; if both the station L and the station K select the timeslot 6 on the primary channel to send an SSW frame, timeslot collision occurs between the station L and the station K in the timeslot 6, and therefore both the station L and the station K fail to perform access; or if only the station F selects the timeslot 7 on the primary channel to send an SSW frame, the station F successfully performs access in the timeslot 7. In comparison with the prior art, based on the method in the single-channel scenario provided by each embodiment of this application above, on the primary channel, each station may select a timeslot for access based on the access control parameter such as the access threshold or the access probability, and then send an SSW frame. This can effectively reduce a probability of timeslot collision between stations in a same timeslot.

As shown in FIG. 10, based on the method in a multi-channel scenario provided by each embodiment of this application above, if the station B selects the timeslot 0 on the primary channel to send an SSW frame, and the station D selects the timeslot 0 on the secondary channel to perform access, no timeslot collision occurs between the station B and the station D in the timeslot 0, and therefore both the station B and the station D successfully perform access; if only the station H selects the timeslot 1 on the secondary channel to send an SSW frame, the station H successfully performs access in the timeslot 1 on the secondary channel; if only the station I selects the timeslot 2 on the primary channel to send an SSW frame, the station I successfully performs access in the timeslot 2 on the primary channel; if only the station G selects the timeslot 4 on the secondary channel to send an SSW frame, the station G successfully performs access in the timeslot 4 on the secondary channel; if both the station L and the station K select the timeslot 6 on the primary channel to send an SSW frame, timeslot collision occurs between the station L and the station K in the timeslot 6 on the primary channel, and therefore both the station L and the station K fail to perform access; or if only the station F selects the timeslot 7 on the primary channel to send an SSW frame, the station F successfully performs access in the timeslot 7 on the primary channel. In comparison with the prior art and the method in the single-channel scenario provided by each embodiment of this application above, in the information transmission method in the multiple-channel scenarios, each station may select a timeslot on the primary channel and the secondary channel for access based on the access control parameter such as the access threshold or the access probability, and then send an SSW frame. This can reduce a probability of access collision between stations in a same timeslot on a same channel more effectively.

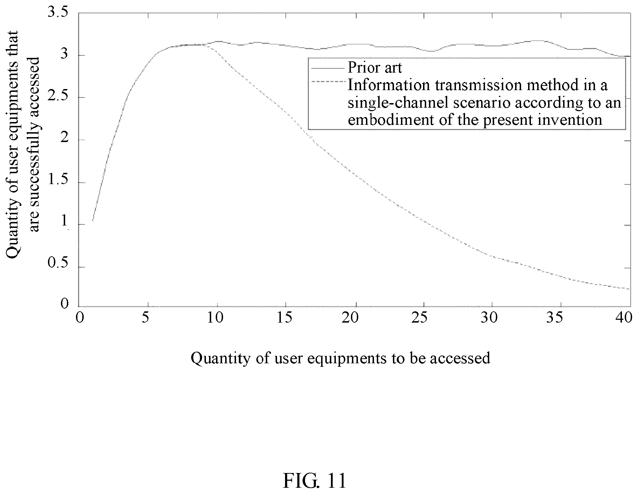

FIG. 11 is a graph of a correspondence between a quantity of user equipments to be accessed and a quantity of user equipments that are successfully accessed according to Embodiment 4 of this application. As shown in FIG. 11, in the prior art, when the quantity of user equipments is greater than a preset value, with increase of the quantity of user equipments, due to increase of timeslot collision, the quantity of user equipments that are successfully accessed in the prior art decreases gradually. However, according to the information transmission method in the single-channel scenario provided by each embodiment of this application above, because the user equipment may contend for a timeslot based on the access control parameter flexibly configured by the network device, when the quantity of user equipments is greater than the preset value, with increase of the quantity of user equipments, the quantity of user equipments that are successfully accessed may be still maintained at a high level. This effectively improves access efficiency of user equipments, and increases a beamforming training success rate.

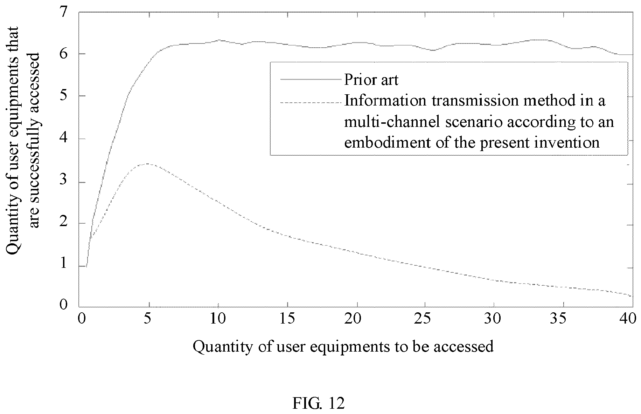

FIG. 12 is another graph of a correspondence between a quantity of user equipments to be accessed and a quantity of user equipments that are successfully accessed according to Embodiment 4 of this application. As shown in FIG. 12, in the prior art, when the quantity of user equipments is greater than a preset value, with increase of the quantity of user equipments, due to increase of timeslot collision, the quantity of user equipments that are successfully accessed in the prior art decreases gradually. However, in the information transmission method in the multi-channel scenario provided by Embodiment 4 of this application, because the user equipment may contend for a timeslot based on the access control parameter flexibly configured by the network device and may perform multi-channel access, access collision between user equipments in a same timeslot on a same channel is reduced. Therefore, when the quantity of user equipments is greater than the preset value, with increase of the quantity of user equipments, the quantity of user equipments that are successfully accessed may be still maintained at a high level. In addition, in comparison with the information transmission in the single-channel scenario, the quantity of user equipments that are successfully accessed also increases significantly. This effectively improves access efficiency of user equipments, and increases a beamforming training success rate.

The information transmission method provided by Embodiment 4 of this application may be further used on a plurality of channels to reduce a probability of access collision between stations in a same timeslot on a same channel more effectively.

Optionally, the duration information of the A-BFT includes DMG duration information corresponding to the primary channel and EDMG duration information corresponding to the primary channel; and the DMG duration information corresponding to the primary channel is used to enable DMG user equipment to determine a DMG time range, randomly select a timeslot from the DMG time range, and then send an SSW frame to the network device in the randomly selected timeslot.

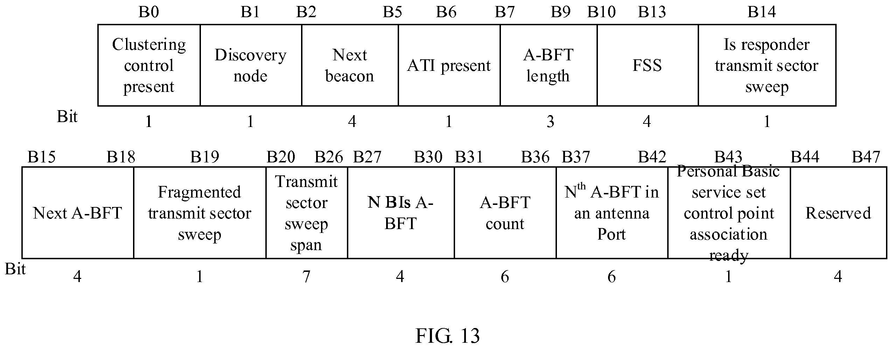

For example, FIG. 13 is a schematic structural diagram of a BI control field according to Embodiment 4 of this application. As shown in FIG. 13, a BI control field may include a one-bit (bit) clustering control present (Clustering Control Present) field, a one-bit discovery node (Discovery Node) field, a four-bit next beacon (Next Beacon) field, a one-bit ATI present (ATI Present) field, a three-bit A-BFT length field, a four-bit frame of sector sweep (Frame of Sector Sweep, FSS) field, a one-bit "is responder transmit sector sweep" (Is Responder Transmit Sector Sweep, Is Responder TXSS) field, a four-bit next A-BFT field, a one-bit fragmented transmit sector sweep (Fragmented TXSS) field, a seven-bit transmit sector sweep span (TXSS Span) field, a four-bit N BIs A-BFT field, a six-bit A-BFT count (A-BFT Count) field, a six-bit $N^{th}$ A-BFT in an antenna port field (N A-BFT in Ant), a one-bit personal basic service set control point association ready (Personal Basic Service Set Control Point Association Ready, PCP Association Ready) field, and a four-bit reserved (Reserved) field.

The DMG duration information corresponding to the primary channel may be located, for example, in the A-BFT length field in FIG. 13, that is, a bit 7 (Bit7, B7) to a bit 9 (Bit9, B9). The EDMG duration information corresponding to the primary channel may be located, for example, in a reserved field other than the A-BFT length field in the BI control field in FIG. 13, that is, a bit 45 (Bit45, B45) to a bit 47 (Bit47, B47). The EDMG duration information corresponding to the primary channel may be further located, for example, in at least one bit of another field than the A-BFT length field in the BI control field in FIG. 13.

The EDMG user equipment may determine a start time of an EDMG time unit based on a value of the A-BFT length field plus 1.

Optionally, that the user equipment determines, based on duration information corresponding to the available channel, a time range corresponding to the available channel in S902 may include:

if the available channel is the primary channel, the user equipment determines, based on the EDMG duration information corresponding to the primary channel, the time range corresponding to the available channel.

Optionally, the beacon frame further includes EDMG duration information corresponding to the secondary channel; and

optionally, that the user equipment determines, based on duration information corresponding to the available channel, a time range corresponding to the available channel in S902 may include:

if the available channel is the secondary channel, the user equipment determines, based on the EDMG duration information corresponding to the secondary channel, the time range corresponding to the available channel.

Optionally, in the method, a DMG duration corresponding to the primary channel and an EDMG duration corresponding to the primary channel are determined by the network device based on a quantity of DMG user equipments to be accessed, a quantity of EDMG user equipments to be accessed, and a quantity of available channels for the EDMG user equipments to be accessed.

Specifically, if the quantity of DMG user equipments to be accessed is $N_1$, and the quantity of EDMG user equipments to be accessed is $N_2$, in an A-BFT time range in a BI, a quantity of EDMG user equipments that can be accessed is $N_2*P$, and a quantity of DMG user equipments that can be accessed is $N_1$. In the information transmission method, when it is ensured that the quantity of DMG user equipments that can be accessed is equal to or approximate to the quantity of EDMG user equipments that can be accessed, the A-BFT time range in the BI may be divided into two parts based on $N_2*P$ and $N_1$. One part is a DMG time range, and the other part is an EDMG time range. In this way, corresponding A-BFT timeslots on the primary channel are separated. All timeslots in the A-BFT time range on the secondary channel may be an EDMG time range.

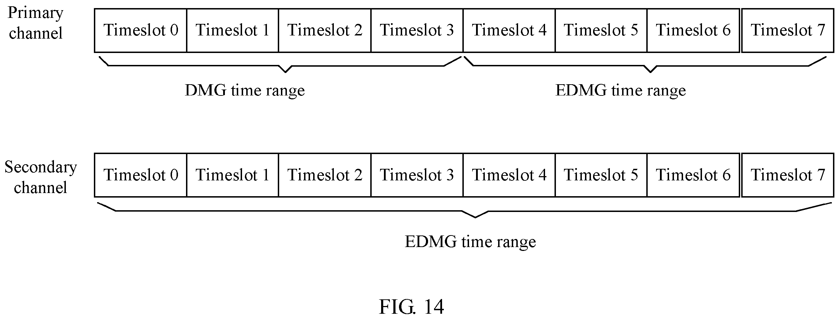

For example, if a quantity of EDMG user equipments to be accessed in a basic service set (Basic Service Set, BSS) is 20, and a quantity of DMG user equipments to be accessed is 4, a duration of an A-BFT in a BI is 8, that is, including 8 timeslots. EDMG user equipment has two available channels, including a primary channel and a secondary channel; and DMG user equipment has only one available channel, that is, a primary channel. To maximize a quantity of user equipments that can be accessed, an access probability P of the EDMG user equipment may be set to 1/2 based on an instruction of the network device. To ensure access fairness between the EDMG user equipment and the DMG user equipment, the A-BFT time range may be divided, as shown in FIG. 14. FIG. 14 is a structural diagram of timeslots corresponding to DMG user equipment and EDMG user equipment according to Embodiment 4 of this application. As shown in FIG. 14, in the information transmission method, a timeslot 0 to a timeslot 3 in the A-BFT time range of the primary channel may be configured as a DMG time range, and a timeslot 4 to a timeslot 7 in the A-BFT time range of the primary channel and all timeslots in the A-BFT time range on the secondary channel may be configured as an EDMG time range.

In the information transmission method provided by Embodiment 4 of this application, access fairness between the DMG user equipment and the EDMG user equipment can be further ensured by controlling the DMG duration corresponding to the primary channel and the EDMG duration corresponding to the primary channel.

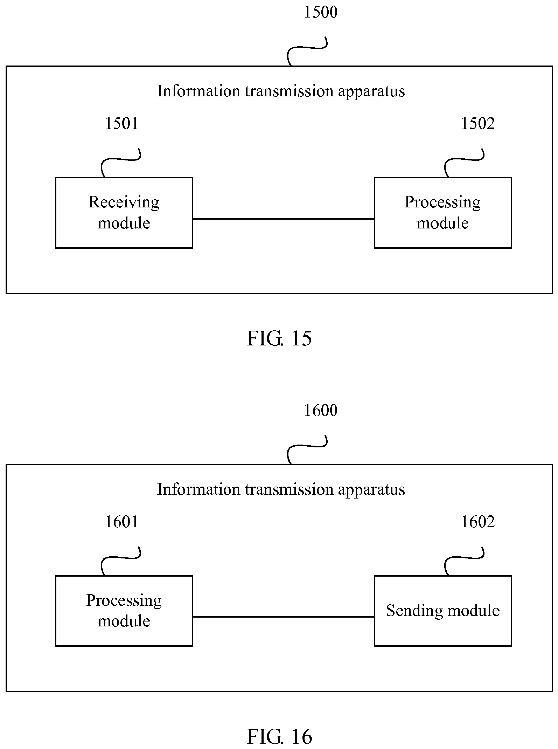

Embodiment 5 of this application provides an information transmission apparatus. The information transmission apparatus may be integrated in user equipment by using software and/or hardware, to perform any information transmission method performed by the user equipment in FIG. 1 to FIG. 14. FIG. 15 is a schematic structural diagram of an information transmission apparatus according to Embodiment 5 of this application. As shown in FIG. 15, the information transmission apparatus 1500 may include:

a receiving module 1501, configured to receive a beacon frame sent by a network device, where the beacon frame includes duration information of an A-BFT and indication information of an access control parameter, and the access control parameter is determined by the network device based on a quantity of user equipments to be accessed and a duration of the A-BFT; and

a processing module 1502, configured to determine a time range of the A-BFT based on the duration information of the A-BFT, determine the access control parameter based on the indication information of the access control parameter, and select a timeslot from the time range of the A-BFT based on the access control parameter.

Optionally, the access control parameter includes a first access threshold and a second access threshold; the first access threshold is less than or equal to the second access threshold; and

correspondingly, the processing module 1502 is specifically configured to generate a random integer value less than or equal to the second access threshold, compare the random integer value with the first access threshold, and if the random integer value is less than or equal to the first access threshold, randomly select a timeslot from the time range of the A-BFT.

Optionally, the access control parameter is an access probability; and

correspondingly, the processing module 1502 is specifically configured to generate a random value less than or equal to 1, compare the random value with the access probability, and if the random value is less than or equal to the access probability, randomly select a timeslot from the time range of the A-BFT.

Optionally, the beacon frame further includes usage indication information of at least one channel; the duration information of the A-BFT includes duration information corresponding to each channel; and

correspondingly, the processing module 1502 is specifically configured to determine, based on the usage indication information of the at least one channel, whether the at least one channel is available, select an available channel from the at least one channel, determine, based on duration information corresponding to the available channel, a time range corresponding to the available channel, and randomly select a timeslot from the time range corresponding to the available channel.

Optionally, the information transmission apparatus 1500 may further include:

a sending module, configured to send an SSW frame to the network device in the randomly selected timeslot by using the available channel.

Optionally, the duration information of the A-BFT includes DMG duration information corresponding to a primary channel and EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and the processing module 1502 is specifically configured to determine, based on the EDMG duration information corresponding to the primary channel, the time range corresponding to the available channel if the available channel is the primary channel.

Optionally, the beacon frame further includes EDMG duration information corresponding to a secondary channel; and

the processing module 1502 is specifically configured to determine, based on the EDMG duration information corresponding to the secondary channel, the time range corresponding to the available channel if the available channel is the secondary channel.

Optionally, a DMG duration corresponding to the primary channel and an EDMG duration corresponding to the primary channel are determined by the network device based on a quantity of DMG user equipments to be accessed, a quantity of EDMG user equipments to be accessed, and a quantity of available channels for the EDMG user equipments to be accessed.

Optionally, the indication information of the access control parameter is located in any one of the following positions in the beacon frame:

at least one reserved bit of a DMG operation information field in a DMG operation element; and

a preset field or an information element of a data payload field, where the preset field or the information element includes at least one bit.

The information transmission apparatus provided by Embodiment 5 of this application may perform any information transmission method performed by the user equipment in FIG. 1 to FIG. 14. For a specific implementation process and a beneficial effect thereof, refer to the foregoing descriptions. Details are not described again herein.

Embodiment 6 of this application further provides an information transmission apparatus. The information transmission apparatus may be integrated in a network device by using software and/or hardware, to perform any information transmission method performed by the network device in FIG. 1 to FIG. 14. FIG. 16 is a schematic structural diagram of an information transmission apparatus according to Embodiment 6 of this application. As shown in FIG. 16, the information transmission apparatus 1600 may include:

a processing module 1601, configured to determine an access control parameter based on a quantity of user equipments to be accessed and a duration of an A-BFT; and

a sending module 1602, configured to send a beacon frame to user equipment, where the beacon frame includes duration information of the A-BFT and indication information of the access control parameter, the duration information of the A-BFT is used to enable the user equipment to determine a time range of the A-BFT, and the indication information of the access control parameter is used to enable the user equipment to determine the access control parameter, and select a timeslot from the time range of the A-BFT based on the access control parameter.

Optionally, the access control parameter comprises a first access threshold and a second access threshold; the first access threshold is less than or equal to the second access threshold; and

the first access threshold is used to enable the user equipment to compare a generated random integer value that is less than or equal to the second access threshold with the first access threshold, and if the random integer value is less than or equal to the first access threshold, randomly select a timeslot from the time range of the A-BFT.

Optionally, the access control parameter is an access probability, and the access probability is used to enable the user equipment to compare a generated random value that is less than or equal to 1 with the access probability, and if the random value is less than or equal to the access probability, randomly select a timeslot from the time range of the A-BFT.

Optionally, the beacon frame further includes usage indication information of at least one channel; the duration information of the A-BFT includes duration information corresponding to each channel;

duration information corresponding to the at least one channel is used to enable the user equipment to determine whether the at least one channel is available, and select an available channel from the at least one channel; and

the duration information corresponding to each channel is used to enable the user equipment to determine, based on duration information corresponding to the available channel, a time range corresponding to the available channel, and then randomly select a timeslot from the time range corresponding to the available channel.

Optionally, the information transmission apparatus 1600 may further include:

a receiving module, configured to receive an SSW frame sent by the user equipment in the randomly selected timeslot by using the available channel.

Optionally, the duration information of the A-BFT includes DMG duration information corresponding to a primary channel and EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and

the EDMG duration information corresponding to the primary channel is used to enable the user equipment to determine, based on the EDMG duration information corresponding to the primary channel when the available channel is the primary channel, the time range corresponding to the available channel.

Optionally, the beacon frame further includes EDMG duration information corresponding to a secondary channel; and

the EDMG duration information corresponding to the secondary channel is used to enable the user equipment to determine, based on the EDMG duration information corresponding to the secondary channel when the available channel is the secondary channel, the time range corresponding to the available channel.

Optionally, before the sending module 1602 sends the beacon frame to the user equipment, the processing module 1601 is further configured to determine, based on a quantity of DMG user equipments to be accessed, a quantity of EDMG user equipments to be accessed, and a quantity of available channels for the EDMG user equipments to be accessed, a DMG duration corresponding to the primary channel and an EDMG duration corresponding to the primary channel.

Optionally, the indication information of the access control parameter is located in any one of the following positions in the beacon frame:

at least one reserved bit of a DMG operation information field in a DMG operation element; and
a preset field or an information element of a data payload field, where the preset field or the information element includes at least one bit.

The information transmission apparatus provided by Embodiment 6 of this application may perform any information transmission method performed by the network device in FIG. 1 to FIG. 14. For a specific implementation process and a beneficial effect thereof, refer to the foregoing descriptions. Details are not described again herein.

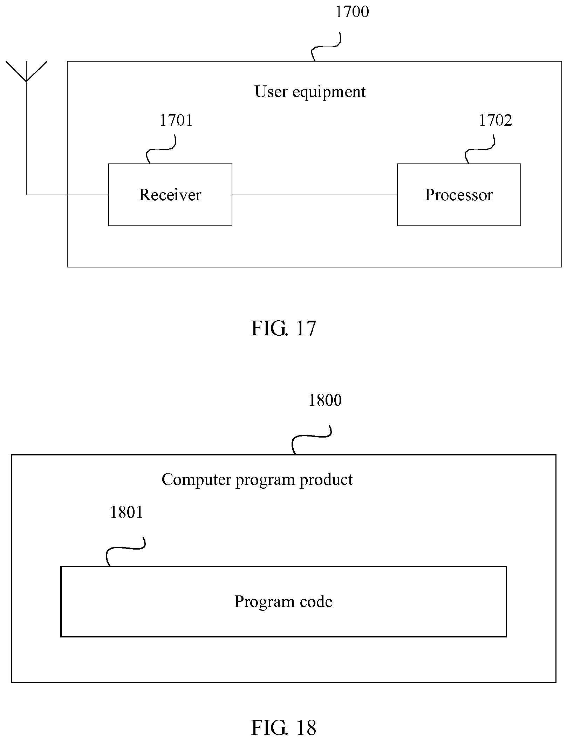

Embodiment 7 of this application further provides user equipment. FIG. 17 is a schematic structural diagram of user equipment according to Embodiment 7 of this application. As shown in FIG. 17, the user equipment 1700 includes a receiver 1701 and a processor 1702, where the receiver 1701 is connected to the processor 1702;

the receiver 1701 is configured to receive a beacon frame sent by a network device, where the beacon frame includes duration information of an A-BFT and indication information of an access control parameter, and the access control parameter is determined by the network device based on a quantity of user equipments to be accessed and a duration of the A-BFT; and

the processor 1702 is configured to determine a time range of the A-BFT based on the duration information of the A-BFT, determine the access control parameter based on the indication information of the access control parameter, and select a timeslot from the time range of the A-BFT based on the access control parameter.

Optionally, the access control parameter includes a first access threshold and a second access threshold; the first access threshold is less than or equal to the second access threshold; and

corresponding, the processor 1702 is specifically configured to generate a random integer value less than or equal to the second access threshold, compare the random integer value with the first access threshold, and if the random integer value is less than or equal to the first access threshold, randomly select a timeslot from the time range of the A-BFT.

Optionally, the access control parameter is an access probability; and

corresponding, the processor 1702 is specifically configured to generate a random value less than or equal to 1, compare the random value with the access probability, and if the random value is less than or equal to the access probability, randomly select a timeslot from the time range of the A-BFT.

Optionally, the beacon frame further includes usage indication information of at least one channel; the duration information of the A-BFT includes duration information corresponding to each channel; and

the processor 1702 is specifically configured to determine, based on the usage indication information of the at least one channel, whether the at least one channel is available, select an available channel from the at least one channel, determine, based on duration information corresponding to the available channel, a time range corresponding to the available channel, and randomly select a timeslot from the time range corresponding to the available channel.

Optionally, the user equipment 1700 further includes a transmitter, where the transmitter is connected to the processor 1702; and

the transmitter is configured to send an SSW frame to the network device in the randomly selected timeslot by using the available channel.

Optionally, the duration information of the A-BFT includes DMG duration information corresponding to a primary channel and EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and

the processor 1702 is specifically configured to determine, based on the EDMG duration information corresponding to the primary channel, the time range corresponding to the available channel if the available channel is the primary channel.

Optionally, the beacon frame further includes EDMG duration information corresponding to a secondary channel; and

the processor 1702 is specifically configured to determine, based on the EDMG duration information corresponding to the secondary channel, the time range corresponding to the available channel if the available channel is the secondary channel.

Optionally, a DMG duration corresponding to the primary channel and an EDMG duration corresponding to the primary channel are determined by the network device based on a quantity of DMG user equipments to be accessed, a quantity of EDMG user equipments to be accessed, and a quantity of available channels for the EDMG user equipments to be accessed.

Optionally, the indication information of the access control parameter is located in any one of the following positions in the beacon frame:

at least one reserved bit of a DMG operation information field in a DMG operation element; and
a preset field or an information element of a data payload field, where the preset field or the information element includes at least one bit.

Optionally, Embodiment 7 of this application further provides a computer program product. FIG. 18 is a schematic structural diagram of a computer program product according to Embodiment 7 of this application. As shown in FIG. 18, the computer program product 1800 may include program code 1801.

The program code 1801 may be corresponding program code used to perform any information transmission method performed by the user equipment according to the foregoing embodiments of this application.

The program code 1801 in the computer program product 1800 may be performed, for example, by the processor 1702 in the user equipment shown in FIG. 17.

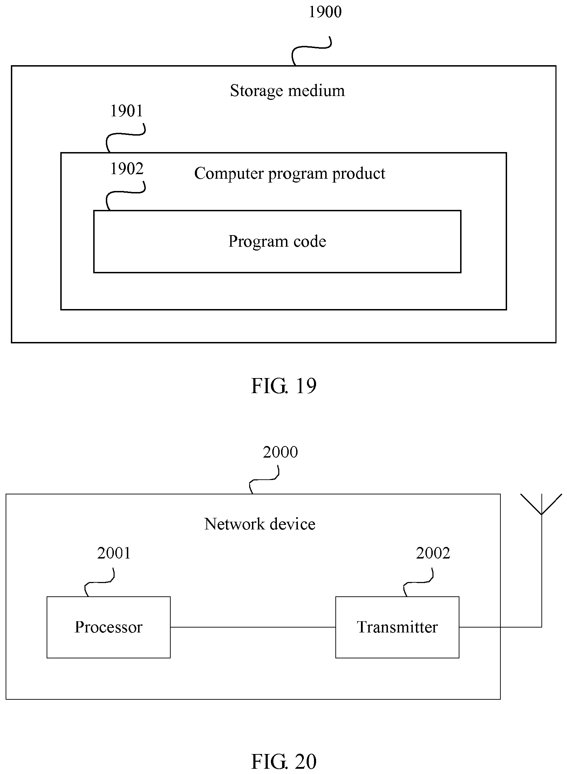

Optionally, Embodiment 7 of this application further provides a storage medium. FIG. 19 is a schematic structural diagram of a storage medium according to Embodiment 7 of this application. As shown in FIG. 19, the storage medium 1900 may be configured to store a computer program product 1901. The computer program product 1901 may include program code 1902.

The program code 1902 may be corresponding program code used to perform any information transmission method performed by the user equipment according to the foregoing embodiments of this application.

The storage medium 1900 may be an internal memory in the user equipment shown in FIG. 17, or may be an external memory connected to the user equipment shown in FIG. 17. The program code 1902 in the computer program product 1901 may be performed, for example, by the processor 1702 in the user equipment shown in FIG. 17.

The user equipment, the computer program product, and the storage medium provided by Embodiment 7 of this application may be configured to perform any information transmission method performed by the user equipment in FIG. 1 to FIG. 14. For specific implementation processes and beneficial effects thereof, refer to the foregoing descriptions. Details are not described again herein.

Embodiment 8 of this application further provides a network device. FIG. 20 is a schematic structural diagram of a network device according to Embodiment 8 of this application. As shown in FIG. 20, the network device 2000 includes a processor 2001 and a transmitter 2002, where the processor 2001 is connected to the transmitter 2002;

the processor 2001 is configured to determine an access control parameter based on a quantity of user equipments to be accessed and a duration of an A-BFT; and

the transmitter 2002 is configured to send a beacon frame to user equipment, where the beacon frame includes duration information of the A-BFT and indication information of the access control parameter, the duration information of the A-BFT is used to enable the user equipment to determine a time range of the A-BFT, and the indication information of the access control parameter is used to enable the user equipment to determine the access control parameter, and select a timeslot from the time range of the A-BFT based on the access control parameter.

Optionally, the access control parameter comprises a first access threshold and a second access threshold; the first access threshold is less than or equal to the second access threshold; and

the first access threshold is used to enable the user equipment to compare a generated random integer value that is less than or equal to the second access threshold with the first access threshold, and if the random integer value is less than or equal to the first access threshold, randomly select a timeslot from the time range of the A-BFT.

Optionally, the access control parameter is an access probability, and the access probability is used to enable the user equipment to compare a generated random value that is less than or equal to 1 with the access probability, and if the random value is less than or equal to the access probability, randomly select a timeslot from the time range of the A-BFT.

Optionally, the beacon frame further includes usage indication information of at least one channel; the duration information of the A-BFT includes duration information corresponding to each channel;

duration information corresponding to the at least one channel is used to enable the user equipment to determine whether the at least one channel is available, and select an available channel from the at least one channel; and

the duration information corresponding to each channel is used to enable the user equipment to determine, based on duration information corresponding to the available channel, a time range corresponding to the available channel, and then randomly select a timeslot from the time range corresponding to the available channel.

Optionally, the network device 2000 further includes a receiver, where

the receiver is configured to receive a sector sweep SSW frame sent by the user equipment in the randomly selected timeslot by using the available channel.

Optionally, the duration information of the A-BFT includes directional multi-gigabit DMG duration information corresponding to a primary channel and enhanced directional multi-gigabit EDMG duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and

the EDMG duration information corresponding to the primary channel is used to enable the user equipment to determine, based on the EDMG duration information corresponding to the primary channel when the available channel is the primary channel, the time range corresponding to the available channel.

Optionally, the beacon frame further includes EDMG duration information corresponding to a secondary channel; and

the EDMG duration information corresponding to the secondary channel is used to enable the user equipment to determine, based on the EDMG duration information corresponding to the secondary channel when the available channel is the secondary channel, the time range corresponding to the available channel.

Optionally, before the transmitter 2002 sends the beacon frame to the user equipment, the processor 2001 is further configured to determine, based on a quantity of DMG user equipments to be accessed, a quantity of EDMG user equipments to be accessed, and a quantity of available channels for the EDMG user equipments to be accessed, a DMG duration corresponding to the primary channel and an EDMG duration corresponding to the primary channel.

Optionally, the indication information of the access control parameter is located in any one of the following positions in the beacon frame:

at least one reserved bit of a DMG operation information field in a DMG operation element; and
a preset field or an information element of a data payload field, where the preset field or the information element includes at least one bit.

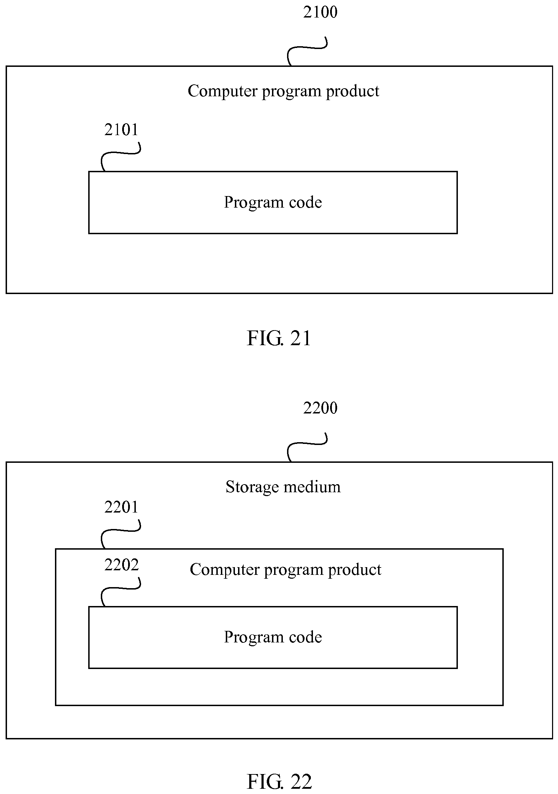

Optionally, Embodiment 8 of this application further provides a computer program product. FIG. 21 is a schematic structural diagram of a computer program product according to Embodiment 8 of this application. As shown in FIG. 21, the computer program product 2100 may include program code 2101.

The program code 2101 may be corresponding program code used to perform any information transmission method performed by the network device according to the foregoing embodiments of this application.

The program code 2101 in the computer program product 2100 may be performed, for example, by the processor 2001 in the user equipment shown in FIG. 20.

Optionally, Embodiment 8 of this application further provides a storage medium. FIG. 22 is a schematic structural diagram of a storage medium according to Embodiment 8 of this application. As shown in FIG. 22, the storage medium 2200 may be configured to store a computer program product 2201, where the computer program product 2201 may include program code 2202.

The program code 2202 may be corresponding program code used to perform any information transmission method performed by the user equipment according to the foregoing embodiments of this application.

The storage medium 2200 may be an internal memory in the network device shown in FIG. 20, or may be an external memory connected to the network device shown in FIG. 20. The program code 2202 in the computer program product 2201 may be performed, for example, by the processor 2001 in the network device shown in FIG. 20.

The network device, the computer program product, and the storage medium provided by Embodiment 8 of this application may be configured to perform any information transmission method performed by the network device in FIG. 1 to FIG. 14. For specific implementation processes and beneficial effects thereof, refer to the foregoing descriptions. Details are not described again herein.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. An information transmission method, comprising:

   receiving (S202), by user equipment, a beacon frame sent by a network device, wherein the beacon frame comprises duration information of an association beamforming training, A-BFT, and indication information of an access control parameter, and the access control parameter is determined by the network device based on a quantity of user equipments to be accessed and a duration of the A-BFT;
   determining (S203), by the user equipment, a time range of the A-BFT based on the duration information of the A-BFT;
   determining (S204), by the user equipment, the access control parameter based on the indication information of the access control parameter; and
   selecting (S205), by the user equipment, a timeslot from the time range of the A-BFT based on the access control parameter;
   wherein the access control parameter comprises:

      (i) a first access threshold and a second access threshold; wherein the first access threshold is less than or equal to the second access threshold; and
      correspondingly, the selecting, by the user equipment, a timeslot from the time range of the A-BFT based on the access control parameter comprises:

         generating, by the user equipment, a random integer value less than or equal to the second access threshold;
         comparing, by the user equipment, the random integer value with the first access threshold; and
         if the random integer value is less than or equal to the first access threshold, randomly selecting, by the user equipment, a timeslot from the time range of the A-BFT; or

(ii) an access probability; and
correspondingly, the selecting, by the user equipment, a timeslot from the time range of the A-BFT based on the access control parameter comprises:

generating (S301), by the user equipment, a random value less than or equal to 1;
comparing (S302), by the user equipment, the random value with the access probability; and
if the random value is less than or equal to the access probability, randomly selecting (S303), by the user equipment, a timeslot from the time range of the A-BFT;

wherein the beacon frame further comprises usage indication information of at least one channel; the duration information of the A-BFT comprises duration information corresponding to each channel; and
the randomly selecting, by the user equipment, a timeslot from the time range of the A-BFT comprises:

determining, by the user equipment based on the usage indication information of the at least one channel, whether the at least one channel is available, and selecting an available channel from the at least one channel;
determining, by the user equipment based on duration information corresponding to the available channel, a time range corresponding to the available channel; and
randomly selecting, by the user equipment, a timeslot from the time range corresponding to the available channel.

2.  The method according to claim 1, wherein the duration information of the A-BFT comprises directional multi-gigabit, DMG, duration information corresponding to a primary channel and enhanced directional multi-gigabit, EDMG, duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and
the determining, by the user equipment based on duration information corresponding to the available channel, a time range corresponding to the available channel comprises:
if the available channel is the primary channel, determining, by the user equipment based on the EDMG duration information corresponding to the primary channel, the time range corresponding to the available channel.

3.  The method according to claim 1, wherein the beacon frame further comprises EDMG duration information corresponding to a secondary channel; and
the determining, by the user equipment based on duration information corresponding to the available channel, a time range corresponding to the available channel comprises:
if the available channel is the secondary channel, determining, by the user equipment based on the EDMG duration information corresponding to the secondary channel, the time range corresponding to the available channel.

4.  User equipment (1700), comprising a receiver (1701) and a processor (1702), wherein the receiver is connected to the processor;
the receiver is configured to receive a beacon frame sent by a network device, wherein the beacon frame comprises duration information of an association beamforming training A-BFT and indication information of an access control parameter, and the access control parameter is determined by the network device based on a quantity of user equipments to be accessed and a duration of the A-BFT; and
the processor is configured to determine a time range of the A-BFT based on the duration information of the A-BFT, determine the access control parameter based on the indication information of the access control parameter, and select a timeslot from the time range of the A-BFT based on the access control parameter;
wherein the access control parameter comprises:

(i) a first access threshold and a second access threshold; the first access threshold is less than or equal to the second access threshold; and
correspondingly, the processor is specifically configured to generate a random integer value less than or equal to the second access threshold, compare the random integer value with the first access threshold, and if the random integer value is less than or equal to the first access threshold, randomly select a timeslot from the time range of the A-BFT; or
(ii) an access probability; and

wherein the processor is specifically configured to generate a random value less than or equal to 1, compare the random value with the access probability, and if the random value is less than or equal to the access probability, randomly select a timeslot from the time range of the A-BFT;

wherein the beacon frame further comprises usage indication information of at least one channel; the duration information of the A-BFT comprises duration information corresponding to each channel; and

the processor is specifically configured to determine, based on the usage indication information of the at least one channel, whether the at least one channel is available, select an available channel from the at least one channel, determine, based on duration information corresponding to the available channel, a time range corresponding to the available channel, and randomly select a timeslot from the time range corresponding to the available channel.

5. The user equipment according to claim 4, wherein the duration information of the A-BFT comprises directional multi-gigabit, DMG, duration information corresponding to a primary channel and enhanced directional multi-gigabit, EDMG, duration information corresponding to the primary channel; the DMG duration information corresponding to the primary channel is used to enable DMG user equipment to determine a time range, randomly select a timeslot from the time range, and then send an SSW frame to the network device in the randomly selected timeslot; and

the processor is specifically configured to determine, based on the EDMG duration information corresponding to the primary channel, the time range corresponding to the available channel if the available channel is the primary channel.

6. The user equipment according to claim 4, wherein the beacon frame further comprises EDMG duration information corresponding to a secondary channel; and

the processor is specifically configured to determine, based on the EDMG duration information corresponding to the secondary channel, the time range corresponding to the available channel if the available channel is the secondary channel.

7. A network device (2000), comprising a processor (2001) and a transmitter (2002), wherein the processor is connected to the transmitter;

the processor is configured to determine an access control parameter based on a quantity of user equipments to be accessed and a duration of an association beamforming training, A-BFT; and

the transmitter is configured to send a beacon frame to user equipment, wherein the beacon frame comprises duration information of the A-BFT and indication information of the access control parameter, the duration information of the A-BFT is used to enable the user equipment to determine a time range of the A-BFT, and the indication information of the access control parameter is used to enable the user equipment to determine the access control parameter, and select a timeslot from the time range of the A-BFT based on the access control parameter;

wherein the access control parameter comprises:

(i) a first access threshold and a second access threshold; the first access threshold is less than or equal to the second access threshold; and

the first access threshold is used to enable the user equipment to compare a generated random integer value that is less than or equal to the second access threshold with the first access threshold, and if the random integer value is less than or equal to the first access threshold, randomly select a timeslot from the time range of the A-BFT; or

(ii) an access probability, and the access probability is used to enable the user equipment to compare a generated random value that is less than or equal to 1 with the access probability, and if the random value is less than or equal to the access probability, randomly select a timeslot from the time range of the A-BFT;

wherein the beacon frame further comprises usage indication information of at least one channel; the duration information of the A-BFT comprises duration information corresponding to each channel;

duration information corresponding to the at least one channel is used to enable the user equipment to determine whether the at least one channel is available, and select an available channel from the at least one channel; and

the duration information corresponding to each channel is used to enable the user equipment to determine, based on duration information corresponding to the available channel, a time range corresponding to the available channel, and then randomly select a timeslot from the time range corresponding to the available channel.

**Patentansprüche**

1. Informationsübertragungsverfahren, das Folgendes umfasst:

Empfangen (S202), durch eine Benutzereinrichtung, eines durch eine Netzwerkvorrichtung gesendeten Beacon-Frames, wobei das Beacon-Frame Dauerinformationen eines Assoziationsstrahlformungstrainings (*association beamforming training* - A-BFT) und Anzeigeinformationen eines Zugriffssteuerungsparameters umfasst, und wobei der Zugriffssteuerungsparameter durch die Netzwerkvorrichtung basierend auf einer Anzahl von Benutzereinrichtungen, auf die zugegriffen werden soll, und einer Dauer des A-BFTs bestimmt ist;

Bestimmen (S203), durch die Benutzereinrichtung, eines Zeitbereichs des A-BFTs basierend auf den Dauerinformationen des A-BFTs;

Bestimmen (S204), durch die Benutzereinrichtung, des Zugriffssteuerungsparameters basierend auf den Anzeigeinformationen des Zugriffssteuerungsparameters; und

Auswählen (S205), durch die Benutzervorrichtung, eines Zeitschlitzes aus dem Zeitbereich des A-BFTs basierend auf dem Zugriffssteuerungsparameter;

wobei der Zugriffssteuerungsparameter Folgendes umfasst:

(i) eine erste Zugriffsschwelle und eine zweite Zugriffsschwelle; wobei die erste Zugriffsschwelle höchstens die zweite Zugriffsschwelle ist; und dementsprechend, das Auswählen, durch die Benutzereinrichtung, eines Zeitschlitzes aus dem Zeitbereich des A-BFTs basierend auf den Zugriffssteuerungsparameter Folgendes umfasst:

Erzeugen, durch die Benutzereinrichtung, eines ganzzahligen Zufallswertes, der höchstens der zweite Zugriffsschwellenwert ist;

Vergleichen, durch die Benutzereinrichtung, des ganzzahligen Zufallswertes mit der ersten Zugriffsschwelle; und

wenn der ganzzahlige Zufallswert höchstens der erste Zugriffsschwellenwert ist, zufälliges Auswählen, durch die Benutzereinrichtung, eines Zeitschlitzes aus dem Zeitbereich des A-BFTs; oder

(ii) eine Zugriffswahrscheinlichkeit; und

dementsprechend, das Auswählen, durch die Benutzereinrichtung, eines Zeitschlitzes aus dem Zeitbereich des A-BFTs basierend auf den Zugriffssteuerungsparameter Folgendes umfasst:

Erzeugen (S301), durch die Benutzereinrichtung, eines Zufallswertes von höchstens 1;

Vergleichen (S302), durch die Benutzereinrichtung, des Zufallswertes mit der Zugriffswahrscheinlichkeit; und

wenn der Zufallswert höchstens die Zugriffswahrscheinlichkeit ist, zufälliges Auswählen (S303), durch die Benutzereinrichtung, eines Zeitschlitzes aus dem Zeitbereich des A-BFTs;

wobei das Beacon-Frame ferner Verwendungsanzeigeinformationen von wenigstens einem Kanal umfasst; die Dauerinformationen des A-BFTs Dauerinformationen, die jedem Kanal entsprechen, umfasst; und

das zufällige Auswählen, durch die Benutzereinrichtung, eines Zeitschlitzes aus dem Zeitbereich des A-BFTs Folgendes umfasst:

Bestimmen, durch die Benutzereinrichtung basierend auf den Verwendungsanzeigeinformationen des wenigstens einen Kanals, ob der wenigstens eine Kanal verfügbar ist, und Auswählen eines verfügbaren Kanals aus dem wenigstens einen Kanal;

Bestimmen, durch die Benutzereinrichtung basierend auf den Dauerinformationen, die dem verfügbaren Kanal entsprechen, eines Zeitbereichs, der dem verfügbaren Kanal entspricht; und

zufälliges Auswählen, durch die Benutzereinrichtung, eines Zeitschlitzes aus dem Zeitbereich, der dem verfügbaren Kanal entspricht.

**2.** Verfahren nach Anspruch 1, wobei die Dauerinformationen des A-BFTs Richtungs-*Multi-Gigabit*(*directional multigigabit* - DMG)-Dauerinformationen, die einem Primärkanal entsprechen, und erweiterte Richtungs-Multi-Gigabit(*enhanced directional multi-gigabit*- EDMG)-Dauerinformationen, die dem Primärkanal entsprechen, umfassen; wobei die DMG-Dauerinformationen, die dem Primärkanal entsprechen, verwendet werden, um der DMG-Benutzereinrichtung zu ermöglichen, einen Zeitbereich zu bestimmen, einen Zeitschlitz aus dem Zeitbereich zufällig auszuwählen und anschließend in dem zufällig ausgewählten Zeitschlitz ein SSW-Frame an die Netzwerkvorrichtung zu senden; und

das Bestimmen, durch die Benutzereinrichtung basierend auf Dauerinformationen, die dem verfügbaren Kanal entsprechen, eines Zeitbereichs, der dem verfügbaren Kanal entspricht, Folgendes umfasst:

wenn der verfügbare Kanal der Primärkanal ist, Bestimmen, durch die Benutzereinrichtung basierend auf den EDMG-Dauerinformationen, die dem Primärkanal entsprechen, des Zeitbereichs, der dem verfügbaren Kanal entspricht.

3. Verfahren nach Anspruch 1, wobei das Beacon-Frame ferner EDMG-Dauerinformationen, die einem Sekundärkanal entsprechen, umfasst; und

das Bestimmen, durch die Benutzereinrichtung basierend auf Dauerinformationen, die dem verfügbaren Kanal entsprechen, eines Zeitbereichs, der dem verfügbaren Kanal entspricht, Folgendes umfasst:

wenn der verfügbare Kanal der Sekundärkanal ist, Bestimmen, durch die Benutzereinrichtung basierend auf den EDMG-Dauerinformationen, die dem Sekundärkanal entsprechen, des Zeitbereichs, der dem verfügbaren Kanal entspricht.

4. Benutzereinrichtung (1700), die einen Empfänger (1701) und einen Prozessor (1702) umfasst, wobei der Empfänger mit dem Prozessor verbunden ist;

der Empfänger konfiguriert ist, um ein durch eine Netzwerkvorrichtung gesendetes Beacon-Frame zu empfangen, wobei das Beacon-Frame Dauerinformationen eines Assoziationsstrahlformungstrainings (A-BFT) und Anzeigeinformationen eines Zugriffssteuerungsparameters umfasst, und der Zugriffssteuerungsparameter durch die Netzwerkvorrichtung basierend auf einer Anzahl von Benutzereinrichtungen, auf die zugegriffen werden soll, und einer Dauer der A-BFT bestimmt wird; und

der Prozessor konfiguriert ist, um einen Zeitbereich des A-BFTs basierend auf den Dauerinformationen des A-BFTs zu bestimmen, den Zugriffssteuerungsparameter basierend auf den Anzeigeinformationen des Zugriffssteuerungsparameters zu bestimmen und einen Zeitschlitz aus dem Zeitbereich des A-BFTs basierend auf dem Zugriffssteuerungsparameter auszuwählen;

wobei der Zugriffssteuerungsparameter Folgendes umfasst:

(i) eine erste Zugriffsschwelle und eine zweite Zugriffsschwelle; wobei die erste Zugriffsschwelle höchstens die zweite Zugriffsschwelle ist; und dementsprechend, wobei der Prozessor speziell konfiguriert ist, um einen ganzzahligen Zufallswert zu erzeugen, der höchstens der zweite Zugriffsschwellenwert ist, den ganzzahligen Zufallswert mit dem ersten Zugriffsschwellenwert zu vergleichen und, wenn der ganzzahlige Zufallswert höchstens der erste Zugriffsschwellenwert ist, einen Zeitschlitz aus dem Zeitbereich des A-BFTs zufällig auszuwählen; oder

(ii) eine Zugriffswahrscheinlichkeit; und

wobei der Prozessor speziell konfiguriert ist, um einen Zufallswert von höchstens 1 zu erzeugen, den Zufallswert mit der Zugriffswahrscheinlichkeit zu vergleichen und, wenn der Zufallswert höchstens die Zugriffswahrscheinlichkeit ist, einen Zeitschlitz aus dem Zeitbereich des A-BFTs zufällig auszuwählen;

wobei das Beacon-Frame ferner Verwendungsanzeigeinformationen von wenigstens einem Kanal umfasst; die Dauerinformationen des A-BFTs Dauerinformationen, die jedem Kanal entsprechen, umfasst; und

der Prozessor speziell konfiguriert ist, um basierend auf den Verwendungsanzeigeinformationen des wenigstens einen Kanals zu bestimmen, ob der wenigstens eine Kanal verfügbar ist, einen verfügbaren Kanal aus dem wenigstens einen Kanal auszuwählen, basierend auf den Dauerinformationen, die dem verfügbaren Kanal entsprechen, einen Zeitbereich, der dem verfügbaren Kanal entspricht, zu bestimmen und einen Zeitschlitz aus dem Zeitbereich, der dem verfügbaren Kanal entspricht, zufällig auszuwählen.

5. Benutzereinrichtung nach Anspruch 4, wobei die Dauerinformationen der A-BFT Richtungs-Multi-Gigabit(DMG)-Dauerinformationen, die einem Primärkanal entsprechen, und erweiterte Richtungs-Multi-Gigabit(EDMG)-Dauerinformationen, die dem Primärkanal entsprechen, umfassen; wobei die DMG-Dauerinformationen, die dem Primärkanal entsprechen, verwendet werden, um der DMG-Benutzereinrichtung zu ermöglichen, einen Zeitbereich zu bestimmen, einen Zeitschlitz aus dem Zeitbereich zufällig auszuwählen und anschließend in dem zufällig ausgewählten Zeitschlitz ein SSW-Frame an die Netzwerkvorrichtung zu senden; und

der Prozessor speziell konfiguriert ist, um basierend auf den EDMG-Dauerinformationen, die dem Primärkanal entsprechen, den Zeitbereich, der dem verfügbaren Kanal entspricht, zu bestimmen, wenn der verfügbare Kanal der Primärkanal ist.

6. Benutzereinrichtung nach Anspruch 4, wobei das Beacon-Frame ferner EDMG-Dauerinformationen, die einem Sekundärkanal entsprechen, umfasst; und

der Prozessor speziell konfiguriert ist, um basierend auf den EDMG-Dauerinformationen, die dem Sekundärkanal entsprechen, den Zeitbereich, der dem verfügbaren Kanal entspricht, zu bestimmen, wenn der verfügbare Kanal der Sekundärkanal ist.

**7.** Netzwerkvorrichtung (2000), die einen Prozessor (2001) und eine Übertragungsvorrichtung (2002) umfasst, wobei der Prozessor mit der Übertragungsvorrichtung verbunden ist;

wobei der Prozessor konfiguriert ist, um einen Zugriffssteuerungsparameter basierend auf einer Anzahl von Benutzereinrichtungen, auf die zugegriffen werden soll, und einer Dauer eines Assoziationsstrahlformungstrainings (A-BFT) zu bestimmen; und

die Übertragungsvorrichtung konfiguriert ist, um ein Beacon-Frame an die Benutzereinrichtung zu senden, wobei das Beacon-Frame Dauerinformationen des A-BFTs und Anzeigeinformationen des Zugriffssteuerungsparameters umfasst, wobei die Dauerinformationen des A-BFTs verwendet werden, um es der Benutzereinrichtung zu ermöglichen einen Zeitbereich des A-BFTs zu bestimmen, und die Anzeigeinformationen des Zugriffssteuerungsparameters verwendet werden, um es der Benutzereinrichtung zu ermöglichen den Zugriffssteuerungsparameter zu bestimmen, und einen Zeitschlitz aus dem Zeitbereich des A-BFTs basierend auf dem Zugriffssteuerungsparameter auszuwählen;

wobei der Zugriffssteuerungsparameter Folgendes umfasst:

(i) eine erste Zugriffsschwelle und eine zweite Zugriffsschwelle; wobei die erste Zugriffsschwelle höchstens die zweite Zugriffsschwelle ist; und

der erste Zugriffsschwellenwert verwendet wird, um es der Benutzereinrichtung zu ermöglichen, einen erzeugten ganzzahligen Zufallswert, der höchstens der zweite Zugriffsschwellenwert ist, mit dem ersten Zugriffsschwellenwert zu vergleichen, und wenn der ganzzahlige Zufallswert höchstens der Schwellenwert ist, einen Zeitschlitz aus dem Zeitbereich des A-BFTs zufällig auszuwählen; oder

(ii) eine Zugriffswahrscheinlichkeit, und die Zugriffswahrscheinlichkeit verwendet wird, um es der Benutzereinrichtung zu ermöglichen, einen erzeugten Zufallswert, der höchstens 1 ist mit der Zugriffswahrscheinlichkeit zu vergleichen, und wenn der Zufallswert höchstens die Zugriffswahrscheinlichkeit ist, einen Zeitschlitz aus dem Zeitbereich des A-BFTs zufällig auszuwählen;

wobei das Beacon-Frame ferner Verwendungsanzeigeinformationen von wenigstens einem Kanal umfasst;

die Dauerinformationen des A-BFTs Dauerinformationen, die jedem Kanal entsprechen, umfasst;

Dauerinformationen, die dem wenigstens einen Kanal entsprechen, verwendet werden, um es der Benutzereinrichtung zu ermöglichen, zu bestimmen, ob der wenigstens eine Kanal verfügbar ist, und einen verfügbaren Kanal aus dem wenigstens einen Kanal auszuwählen; und

die Dauerinformationen, die jedem Kanal entsprechen, verwendet werden, um es der Benutzereinrichtung zu ermöglichen, basierend auf Dauerinformationen, die dem verfügbaren Kanal entsprechen, einen Zeitbereich, der dem verfügbaren Kanal entspricht, zu bestimmen und anschließend einen Zeitschlitz aus dem Zeitbereich, der dem verfügbaren Kanal entspricht, zufällig auszuwählen.

## Revendications

**1.** Procédé de transmission d'informations, comprenant :

la réception (S202), par un équipement utilisateur, d'une trame balise envoyée par un dispositif de réseau, la trame balise comprenant des informations de durée d'un apprentissage de formation de faisceau par association, A-BFT, et des informations d'indication d'un paramètre de contrôle d'accès, et le paramètre de contrôle d'accès étant déterminé par le dispositif de réseau sur la base d'une quantité d'équipements utilisateurs auxquels il convient d'accéder et d'une durée de l'A-BFT ;

la détermination (S203), par l'équipement utilisateur, d'une plage temporelle de l'A-BFT sur la base des informations de durée de l'A-BFT ;

la détermination (S204), par l'équipement utilisateur, du paramètre de contrôle d'accès sur la base des informations d'indication du paramètre de contrôle d'accès ; et

la sélection (S205), par l'équipement utilisateur, d'un intervalle de temps à partir de la plage temporelle de l'A-BFT sur la base du paramètre de contrôle d'accès ;

dans lequel le paramètre de contrôle d'accès comprend :

(i) un premier seuil d'accès et un second seuil d'accès ; le premier seuil d'accès étant inférieur ou égal au second seuil d'accès ; et

en conséquence, la sélection, par l'équipement utilisateur, d'un intervalle de temps à partir de la plage temporelle de l'A-BFT sur la base du paramètre de contrôle d'accès comprend :

la génération, par l'équipement utilisateur, d'une valeur entière aléatoire inférieure ou égale au second seuil d'accès ;
la comparaison, par l'équipement utilisateur, de la valeur entière aléatoire avec le premier seuil d'accès ; et
si la valeur entière aléatoire est inférieure ou égale au premier seuil d'accès, la sélection aléatoire, par l'équipement utilisateur, d'un intervalle de temps à partir de la plage temporelle de l'A-BFT ; ou

(ii) une probabilité d'accès ; et

en conséquence, la sélection, par l'équipement utilisateur, d'un intervalle de temps à partir de la plage temporelle de l'A-BFT sur la base du paramètre de contrôle d'accès comprend :

la génération (S301), par l'équipement utilisateur, d'une valeur aléatoire inférieure ou égale à 1 ;
la comparaison (S302), par l'équipement utilisateur, de la valeur aléatoire avec la probabilité d'accès ; et
si la valeur aléatoire est inférieure ou égale à la probabilité d'accès, la sélection aléatoire (S303), par l'équipement utilisateur, d'un intervalle de temps à partir de la plage temporelle de l'A-BFT ;

dans lequel la trame balise comprend en outre des informations d'indication d'utilisation d'au moins un canal ;
les informations de durée de l'A-BFT comprennent des informations de durée correspondant à chaque canal ; et
la sélection aléatoire, par l'équipement utilisateur, d'un intervalle de temps à partir de la plage temporelle de l'A-BFT comprend :

la détermination, par l'équipement utilisateur sur la base des informations d'indication d'utilisation de l'au moins un canal, du fait de savoir si l'au moins un canal est disponible, et la sélection d'un canal disponible à partir de l'au moins un canal ;
la détermination, par l'équipement utilisateur sur la base d'informations de durée correspondant au canal disponible, d'une plage temporelle correspondant au canal disponible ; et
la sélection aléatoire, par l'équipement utilisateur, d'un intervalle de temps à partir de la plage temporelle correspondant au canal disponible.

**2.** Procédé selon la revendication 1, dans lequel les informations de durée de l'A-BFT comprennent des informations de durée multi-gigabit directionnelles, DMG, des informations de durée correspondant à un canal primaire et des informations de durée multi-gigabit directionnelles améliorées, EDMG, correspondant au canal primaire ; les informations de durée DMG correspondant au canal primaire sont utilisées pour permettre à l'équipement utilisateur DMG de déterminer une plage temporelle, de sélectionner de manière aléatoire un intervalle de temps à partir de la plage temporelle, puis d'envoyer une trame SSW au dispositif de réseau dans l'intervalle de temps sélectionnée de manière aléatoire ; et
la détermination, par l'équipement utilisateur sur la base d'informations de durée correspondant au canal disponible, d'une plage temporelle correspondant au canal disponible comprend :
si le canal disponible est le canal primaire, la détermination, par l'équipement utilisateur sur la base des informations de durée EDMG correspondant au canal primaire, de la plage temporelle correspondant au canal disponible.

**3.** Procédé selon la revendication 1, dans lequel la trame balise comprend en outre des informations de durée EDMG correspondant à un canal secondaire ; et
la détermination, par l'équipement utilisateur sur la base d'informations de durée correspondant au canal disponible, d'une plage temporelle correspondant au canal disponible comprend :
si le canal disponible est le canal secondaire, la détermination, par l'équipement utilisateur sur la base des informations de durée EDMG correspondant au canal secondaire, de la plage temporelle correspondant au canal disponible.

**4.** Équipement utilisateur (1700), comprenant un récepteur (1701) et un processeur (1702), dans lequel le récepteur est connecté au processeur ;

le récepteur est configuré pour recevoir une trame balise envoyée par un dispositif de réseau, la trame balise comprenant des informations de durée d'un apprentissage de formation de faisceau par association A-BFT et des informations d'indication d'un paramètre de contrôle d'accès, et le paramètre de contrôle d'accès est déterminé par le dispositif de réseau sur la base d'une quantité d'équipements utilisateurs auxquels il convient d'accéder et d'une durée de l'A-BFT ; et

le processeur est configuré pour déterminer une plage temporelle de l'A-BFT sur la base des informations de durée de l'A-BFT, déterminer le paramètre de contrôle d'accès sur la base des informations d'indication du paramètre de contrôle d'accès, et sélectionner un intervalle de temps à partir de la plage temporelle de l'A-BFT sur la base du paramètre de contrôle d'accès ;

dans lequel le paramètre de contrôle d'accès comprend :

(i) un premier seuil d'accès et un second seuil d'accès ; le premier seuil d'accès est inférieur ou égal au second seuil d'accès ; et

en conséquence, le processeur est spécifiquement configuré pour générer une valeur entière aléatoire inférieure ou égale au second seuil d'accès, comparer la valeur entière aléatoire avec le premier seuil d'accès, et si la valeur entière aléatoire est inférieure ou égale au premier seuil d'accès, sélectionner de manière aléatoire un intervalle de temps à partir de la plage temporelle de l'A-BFT ; ou

(ii) une probabilité d'accès ; et

dans lequel le processeur est spécifiquement configuré pour générer une valeur aléatoire inférieure ou égale à 1, comparer la valeur aléatoire avec la probabilité d'accès, et si la valeur aléatoire est inférieure ou égale à la probabilité d'accès, sélectionner de manière aléatoire un intervalle de temps à partir de la plage temporelle de l'A-BFT ;

dans lequel la trame balise comprend en outre des informations d'indication d'utilisation d'au moins un canal ; les informations de durée de l'A-BFT comprennent des informations de durée correspondant à chaque canal ; et le processeur est spécifiquement configuré pour déterminer, sur la base des informations d'indication d'utilisation de l'au moins un canal, si l'au moins un canal est disponible, sélectionner un canal disponible dans l'au moins un canal, déterminer, sur la base des informations de durée correspondant au canal disponible, une plage temporelle correspondant au canal disponible, et sélectionner de manière aléatoire un intervalle de temps à partir de la plage temporelle correspondant au canal disponible.

5. Équipement utilisateur selon la revendication 4, dans lequel les informations de durée de l'A-BFT comprennent des informations de durée multi-gigabit directionnelles, DMG, correspondant à un canal primaire et des informations de durée multi-gigabit directionnelles améliorées, EDMG correspondant au canal primaire ; les informations de durée DMG correspondant au canal primaire sont utilisées pour permettre à l'équipement utilisateur DMG de déterminer une plage temporelle, de sélectionner de manière aléatoire un intervalle de temps à partir de la plage temporelle, puis d'envoyer une trame SSW au dispositif de réseau dans l'intervalle de temps sélectionnée de manière aléatoire ; et

le processeur est spécifiquement configuré pour déterminer, sur la base des informations de durée EDMG correspondant au canal primaire, la plage temporelle correspondant au canal disponible si le canal disponible est le canal primaire.

6. Équipement utilisateur selon la revendication 4, dans lequel la trame balise comprend en outre des informations de durée EDMG correspondant à un canal secondaire ; et

le processeur est spécifiquement configuré pour déterminer, sur la base des informations de durée EDMG correspondant au canal secondaire, la plage temporelle correspondant au canal disponible si le canal disponible est le canal secondaire.

7. Dispositif de réseau (2000), comprenant un processeur (2001) et un émetteur (2002), dans lequel le processeur est connecté à l'émetteur ;

le processeur est configuré pour déterminer un paramètre de contrôle d'accès sur la base d'une quantité d'équipements utilisateurs auxquels il convient d'accéder et d'une durée d'un apprentissage de formation de faisceau par association, A-BFT ; et

l'émetteur est configuré pour envoyer une trame balise à l'équipement utilisateur, la trame balise comprenant des informations de durée de l'A-BFT et des informations d'indication du paramètre de contrôle d'accès, les informations de durée de l'A-BFT étant utilisées pour permettre à l'équipement utilisateur de déterminer une plage temporelle de l'A-BFT, et les informations d'indication du paramètre de contrôle d'accès étant utilisées pour permettre à l'équipement utilisateur de déterminer le paramètre de contrôle d'accès, et sélectionner un intervalle de temps à partir de la plage temporelle de l'A-BFT sur la base du paramètre de contrôle d'accès ;

dans lequel le paramètre de contrôle d'accès comprend :

(i) un premier seuil d'accès et un second seuil d'accès ; le premier seuil d'accès est inférieur ou égal au second seuil d'accès ; et

le premier seuil d'accès est utilisé pour permettre à l'équipement utilisateur de comparer une valeur entière aléatoire générée inférieure ou égale au second seuil d'accès avec le premier seuil d'accès, et si la valeur entière aléatoire est inférieure ou égale au premier seuil d'accès, sélectionner de manière aléatoire un intervalle de temps à partir de la plage temporelle de l'A-BFT ; ou

(ii) une probabilité d'accès, et la probabilité d'accès est utilisée pour permettre à l'équipement utilisateur de comparer une valeur aléatoire générée inférieure ou égale à 1 avec la probabilité d'accès, et si la valeur aléatoire est inférieure ou égale à la probabilité d'accès, sélectionner de manière aléatoire un intervalle de temps à partir de la plage temporelle de l'A-BFT ;

dans lequel la trame balise comprend en outre des informations d'indication d'utilisation d'au moins un canal ;

les informations de durée de l'A-BFT comprennent des informations de durée correspondant à chaque canal ;

des informations de durée correspondant à l'au moins un canal sont utilisées pour permettre à l'équipement utilisateur de déterminer si l'au moins un canal est disponible, et de sélectionner un canal disponible à partir de l'au moins un canal ; et

les informations de durée correspondant à chaque canal sont utilisées pour permettre à l'équipement utilisateur de déterminer, sur la base des informations de durée correspondant au canal disponible, une plage temporelle correspondant au canal disponible, puis de sélectionner de manière aléatoire un intervalle de temps à partir de la plage temporelle correspondant au canal disponible.

FIG. 1

```
┌──────────────┐                                    ┌──────────────┐
│     User     │                                    │   Network    │
│  equipment   │                                    │    device    │
└──────────────┘                                    └──────────────┘
        │                              ┌──────────────────────────────────────┐
        │                              │ S201. A network device determines an │
        │                              │  access control parameter based on a │
        │                              │   quantity of user equipments to be  │
        │                              │ accessed and a duration of an A-BFT   │
        │                              └──────────────────────────────────────┘
        │      ┌──────────────────────────────────────────┐
        │      │ S202. The network device sends a beacon   │
        │      │ frame to user equipment, where the beacon │
        │      │ frame includes duration information of the│
        │      │  A-BFT and indication information of the  │
        │      │     access control parameter              │
        │◄─────┴──────────────────────────────────────────┘
 ┌──────────────────────────────────────┐
 │ S203. The user equipment determines a │
 │  time range of the A-BFT based on the │
 │   duration information of the A-BFT   │
 └──────────────────────────────────────┘
        │
 ┌──────────────────────────────────────┐
 │ S204. The user equipment determines the│
 │  access control parameter based on the │
 │   indication information of the access │
 │          control parameter             │
 └──────────────────────────────────────┘
        │
 ┌──────────────────────────────────────┐
 │ S205. The user equipment selects a    │
 │ timeslot from the time range of the A-│
 │   BFT based on the access control     │
 │              parameter                │
 └──────────────────────────────────────┘
        │
        │
```

FIG. 2

User equipment generates a random integer value less than or equal to a second access threshold ⟍⟋ S301

The user equipment compares the random integer value with a first access threshold ⟍⟋ S302

If the random integer value is less than or equal to the first access threshold, the user equipment randomly selects a timeslot from a time range of an A-BFT ⟍⟋ S303

FIG. 3

PCP/AP

Beacon frame | SSW feedback frame | SSW feedback frame

Select an A-BFT timeslot 7

Station 1

Random integer value = 2 | SSW frame

Station 2

Random integer value = 6

Select an A-BFT timeslot 3

Station 3

Random integer value = 3 | SSW frame

FIG. 4

```
┌─────────────────────────────────────────────────────────┐
│                                                         │
│  User equipment generates a random value less than or   │ ⟋  S501
│  equal to 1                                             │
│                                                         │
└─────────────────────────────────────────────────────────┘
                            │
                            ▼
┌─────────────────────────────────────────────────────────┐
│  The user equipment compares the random value with an   │ ⟋  S502
│  access probability                                     │
└─────────────────────────────────────────────────────────┘
                            │
                            ▼
┌─────────────────────────────────────────────────────────┐
│  If the random value is less than or equal to the       │
│  access probability, the user equipment randomly        │ ⟋  S503
│  selects a timeslot from a time range of an A-BFT       │
└─────────────────────────────────────────────────────────┘
```

FIG. 5

PCP/AP

Beacon
frame

SSW
feedback
frame

Station 1

Random value =
0.747

Select an A-BFT
timeslot 4

Station 2

Random Value =
0.231

SSW
frame

Station 3

Random Value =
0.357

FIG. 6

| Element identifier | Length | DMG operation information | DMG basic service set parameter configuration |
|---|---|---|---|

Byte     1       1         2                      8

      B0         B1                  B2           B3        B15

| Time division data transfer interval | Pseudo static allocations | Personal Basic service set control point handover | Reserved |
|---|---|---|---|

Bit     1           1               1                 13

FIG. 7

B0                                         B15

| Indication information of an access control parameter |
|---|

Bit                   16

FIG. 8

```
┌──────────────┐                                    ┌──────────────┐
│    User      │                                    │   Network    │
│  equipment   │                                    │   device     │
└──────────────┘                                    └──────────────┘
```

S901. User equipment determines, based on usage
indication information of at least one channel, whether
the at least one channel is available, and selects an
available channel from the at least one channel

S902. The user equipment determines, based on
duration information corresponding to the available
channel, a time range corresponding to the available
channel

S903. The user equipment randomly selects a timeslot
from the time range corresponding to the available
channel

S904. The user equipment sends an SSW frame to a
network device in the randomly selected timeslot by
using the available channel

FIG. 9

FIG. 10

FIG. 11

FIG. 12

| B0 | B1 | B2 | B5 B6 | B7 | B9 B10 | B13 | B14 |
|---|---|---|---|---|---|---|---|
| Clustering control present | Discovery node | Next beacon | ATI present | A-BFT length | FSS | | Is responder transmit sector sweep |

Bit      1      1      4      1      3      4      1

| B15 B18 | B19 | B20 B26 | B27 B30 | B31 B36 | B37 B42 | B43 | B44 B47 |
|---|---|---|---|---|---|---|---|
| Next A-BFT | Fragmented transmit sector sweep | Transmit sector sweep span | N BIs A-BFT | A-BFT count | $N^{th}$ A-BFT in an antenna Port | Personal Basic service set control point association ready | Reserved |

Bit      4      1      7      4      6      6      1      4

FIG. 13

EP 3 531 788 B1

EP 3 531 788 B1

| Primary channel | Timeslot 0 | Timeslot 1 | Timeslot 2 | Timeslot 3 | Timeslot 4 | Timeslot 5 | Timeslot 6 | Timeslot 7 |
|---|---|---|---|---|---|---|---|---|

DMG time range                         EDMG time range

| Secondary channel | Timeslot 0 | Timeslot 1 | Timeslot 2 | Timeslot 3 | Timeslot 4 | Timeslot 5 | Timeslot 6 | Timeslot 7 |
|---|---|---|---|---|---|---|---|---|

EDMG time range

FIG. 14

1500

Information transmission apparatus

1501

Receiving module

1502

Processing module

FIG. 15

1600

Information transmission apparatus

1601

Processing module

1602

Sending module

FIG. 16

1700

## User equipment

1701

Receiver

1702

Processor

FIG. 17

1800

## Computer program product

1801

Program code

FIG. 18

1900

Storage medium

1901

Computer program product

1902

Program code

FIG. 19

2000

Network device

2001

Processor

2002

Transmitter

FIG. 20

2100

Computer program product

2101

Program code

FIG. 21

2200

Storage medium

2201

2202

Computer program product

Program code

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Enhanced channel access in A-BFT for 1 1 ay , 11 -16-1 164-00-00ay-enhanced-channel-access-in-a-bft-for-1 1 ay. **TONY XIAO HAN (HUAWEI.** IEEE DRAFT. IEEE-SA, 10 September 2016, 1-19
- On Random Access in A-BFT J1 1 -16-0948-00-00ay-on-random-access-in-a-bft. **SANG G KIM (LG ELECTRONICS.** IEEE DRAFT, 11-16-0948-00-00AY-ON-RANDOM-ACCESS-IN-A-BFT. IEEE-SA MENTOR, 25 July 2016, 1-10

- On the Implementation of Dynamic Load Balancing for A-BFT Channel, 11-16-1483-00-00ay-on-the-implementation-of -dynamic-load-balancing-for-a-bit-channel. **SANGGOOK KIM (LG ELECTRONICS.** IEEE DRAFT, 11-16-1483-00-OOAY-ON-THE-IMPLEMENTATAON-OF-DYNAMIC-LOAD-BALANCING-FOR-A-BFT-CHA NNEL. IEEE-SAMENTOR, 07 November 2016, 1-11
- Adaptive multiple Access Class Barring factors forM2M communications in LTE-A Networks. **GHARBI SAMI et al.** 2015 12TH ANNUAL IEEE CONSUMER COMMUNICATIONS ANDNETWORKING CONFERENCE (CCNC). IEEE, 09 January 2015, 605-606